Europäisches Patentamt

European Patent Office

Office européen des brevets

(19)

(11) EP 0 800 718 B1

(12) FASCICULE DE BREVET EUROPEEN

(45) Date de publication et mention
de la délivrance du brevet:
**08.03.2000 Bulletin 2000/10**

(21) Numéro de dépôt: **95938334.0**

(22) Date de dépôt: **05.12.1995**

(51) Int Cl.⁷: $H02P\ 6/20$

(86) Numéro de dépôt international:
**PCT/CA95/00682**

(87) Numéro de publication internationale:
**WO 96/20528 (04.07.1996 Gazette 1996/30)**

(54) **APPAREIL ET METHODE POUR DEMARRER UNE MACHINE SYNCHRONE**

APPARAT UND VERFAHREN ZUM STARTEN EINER SYNCHRONMASCHINE

APPARATUS AND METHOD FOR STARTING A SYNCHRONOUS MACHINE

(84) Etats contractants désignés:
**AT BE CH DE DK ES FR GB GR IE IT LI LU MC NL
PT SE**

(30) Priorité: **28.12.1994 US 365459**

(43) Date de publication de la demande:
**15.10.1997 Bulletin 1997/42**

(60) Demande divisionnaire: **98118221.5 / 0 889 580**

(73) Titulaire: **HYDRO-QUEBEC
Montréal Québec H2Z 1A4 (CA)**

(72) Inventeurs:
 • COUTURE, Pierre
  **Boucherville, Québec J4B 4A4 (CA)**

 • **FRANCOEUR, Bruno
  Beloeil, Québec J3G 6M1 (CA)**
 • **LAMBERT, Ghislain
  Beloeil, Québec J3G 6H5 (CA)**

(74) Mandataire: **Thébault, Jean-Louis
  Cabinet Thébault
  111 cours du Médoc
  33300 Bordeaux (FR)**

(56) Documents cités:
  **EP-A- 0 254 537      EP-A- 0 544 628
  EP-A- 0 571 076      US-A- 5 323 094
  US-A- 5 350 984**

 • **PATENT ABSTRACTS OF JAPAN vol. 014 no.
  108 (E-0896) ,27 Février 1990 & JP,A,01 308192
  (FUJITSU GENERAL LTD) 12 Décembre 1989,**

## Description

Le domaine de l'invention:

La présente invention concerne une méthode et un appareil pour démarrer une machine à courant alternatif ayant un rotor et un stator muni d'enroulements.

Art antérieur:

Connu dans l'art antérieur, il y a la demande de brevet européen No. EP-A-0,571,076, dans laquelle sont décrits une méthode et un appareil pour démarrer une machine DC sans balais. La méthode utilisée est la suivante. On applique, dans un premier temps, un vecteur électrique au moteur dont la phase de ce vecteur sera incrémentée jusqu'à ce qu'elle atteigne la valeur prédéterminée ($+\Delta f$). On note la position finale ($C_1$) de déplacement du rotor. Dans un deuxième temps, on applique un vecteur électrique au moteur dont la phase de ce vecteur sera décrémentée jusqu'à ce qu'elle atteigne la valeur prédéterminée ($-\Delta f$). On note la position finale ($C_2$) de déplacement du rotor. De ces deux déplacements $C_1$ et $C_2$ on fait la moyenne afin d'obtenir la valeur de position de départ laquelle correspond à la superposition du vecteur pôle magnétique $\varphi$ et la force magnétomotrice I.

Cette méthode pour démarrer un moteur a un inconvénient important dû au fait qu'on doit déplacer de façon aléatoire le rotor à deux reprises avant le démarrage. Plus spécifiquement, cela pose un problème dans le cas où le moteur est relié à une lourde charge et qu'il n'est pas possible de permettre un mouvement aléatoire du rotor avant son démarrage.

Connu dans l'art, il y a aussi le brevet américain No. US-A-5,323,094, dans lequel sont décrits une méthode et un appareil pour démarrer une machine DC sans balais et sans senseur de position. La méthode utilisée consiste à faire tourner le rotor du moteur dans une direction désirée en appliquant une séquence de démarrage dans laquelle au moins deux des trois phases du stator sont énergisées pour produire un champ magnétique.

Comme dans le cas de la demande de brevet européen No. EP-A-0,571,076, cette méthode pour démarrer un moteur a un inconvénient important dû au fait qu'on doit déplacer de façon aléatoire le rotor avant le démarrage. Plus spécifiquement, cela pose un problème dans le cas où le moteur est relié à une lourde charge et qu'il n'est pas possible de permettre un mouvement aléatoire du rotor avant son démarrage.

Connu dans l'art antérieur, il y a le brevet américain No 5,221,881 de Scott W. CAMERON dans lequel est décrit un circuit pour faire fonctionner un moteur polyphasé à courant continu. Aux lignes 52 à 60 de la première colonne, il est mentionné, par exemple, que selon une façon largement répandue le moteur est démarré dans une position connue puis une information relative à la position instantanée ou courante du moteur est produite. Une façon de produire une telle information sur la position instantanée du moteur a été développée en utilisant le procédé de commutation du moteur, et implique l'identification de la bobine exploratrice et la mesure de sa force contre-électromotrice qui est la force contre-électromotrice induite dans le bobine lorsque celui-ci se déplace à travers le champ magnétique produit par le stator. Cette méthode pour démarrer un moteur a un inconvénient dû au fait qu'on doit connaître la position du rotor au moment du démarrage. Pour connaître cette position du rotor au moment du démarrage, celui-ci doit être déplacé de façon substantielle par rapport au stator de façon à ce que la force contre-électromotrice puisse être mesurée. Plus spécifiquement, cela pose un problème dans le cas où le moteur est relié à une lourde charge et qu'il n'est pas possible de permettre un mouvement substantiel aléatoire du rotor durant son démarrage.

Également connu dans l'art antérieur, il y a le brevet américain No 4,814,677 de Allan B. PLUNKETT dans lequel est décrit un circuit de contrôle d'orientation de champ d'un moteur à aimant permanent. Aux lignes 22 à 29 de la colonne 7 de ce brevet, il est mentionné que l'amplitude du courant $I_a$ est suffisante pour provoquer un déplacement du rotor selon son alignement naturel lorsque le champ magnétique du stator est appliqué. Après l'application du courant $I_a$ pour une période de temps suffisante pour permettre un alignement du rotor, un convertisseur 37 est alimenté pour produire un courant en forme de rampe selon un axe $\beta$ ce qui produit une onde excitatrice de force magnétomotrice de rotation dans l'entrefer, produisant un couple amorçant une rotation du rotor. Encore une fois, l'inconvénient avec ce procédé est que lorsque le rotor est branché à une lourde charge, dans certaines occasions, il n'est pas possible de permettre un mouvement substantiel aléatoire du rotor durant un démarrage du moteur.

De plus, dans le brevet américain No 4,748,387 de Jiro TANUMA et al., il y est décrit un appareil et une méthode pour contrôler la position de démarrage du rotor d'un moteur à courant continu sans collecteur. Aux lignes 4 à 15 de la troisième colonne, il est mentionné que la méthode comprend des étapes où, au moment du démarrage du moteur, on effectue une commutation du courant appliqué aux bobinages de l'armature pour les exciter selon plusieurs phases différentes pour ainsi localiser le rotor par rapport à une position angulaire de démarrage. Pour tenir compte de l'éventualité où le rotor soit positionné à la position angulaire de démarrage, on enlève la charge reliée au rotor, au moins avant que la dernière phase ne soit excitée, et on contrôle ensuite la force d'entraînement en rotation en comptant les impulsions de sortie du moyen pour mesurer la vitesse pour ainsi détecter la position angulaire du rotor. La direction de rotation du rotor est contrôlée à partir d'impulsions de sortie du moyen pour mesurer la vitesse et du comptage final de ces impulsions de sortie. Encore une fois, l'inconvénient avec cette méthode pour démarrer un moteur est que la charge reliée au rotor doit être enlevée durant l'opération de démarrage. Cette méthode ne permet pas un démarrage du moteur lorsque la charge est reliée au moteur.

Les documents suivants sont également connus dans l'art antérieur:

4,368,411   KIDD
4,409,530   NEEPER et al.
4,429,262   UTENICK
4,546,293   PETERSON et al.
4,712,050   NAGASAWA et al.
5,162,709   OHI
5,194,794   SHAMOTO
5,204,604   RADUN
5,221,880   BARTHOLOW et al.

Aucun de ces brevets ne présente une méthode pour démarrer un moteur dans un cas où le moteur est branché à une lourde charge et qu'aucun mouvement aléatoire substantiel du moteur n'est permis.

Un objet de la présente invention est de proposer une méthode et un appareil pour démarrer une machine à courant alternatif ayant un rotor et un stator muni d'enroulements même dans le cas où le moteur est branché à une lourde charge.

Selon la présente invention, il est proposé une méthode pour démarrer une machine synchrone ayant un rotor et un stator muni d'enroulements, le rotor ayant une position initiale par rapport au stator, la méthode comprend les étapes suivantes (a) initialiser une phase de démarrage d'une première somme vectorielle de sommes vectorielles successives de courants destinées à être appliquée aux enroulements; (b) appliquer des sommes vectorielles successives de courants aux enroulements, chacune des sommes vectorielles successives ayant une phase, (c) détecter, pour chacune des sommes vectorielles de courants appliquée à l'étape (b), un mouvement du rotor ainsi qu'une direction de ce mouvement par rapport au stator, la méthode est caractérisée en ce qu'elle comprend en outre les étapes suivantes:

(d) compenser, pour chaque mouvement et chaque direction détectés à l'étape (c), la phase PVE d'une somme vectorielle subséquente des sommes vectorielles successives de courants appliquée aux enroulements pour ramener le rotor vers sa position initiale;

(e) détecter si le rotor a bougé par rapport au stator après l'application des sommes vectorielles successives de courants de l'étape (b) et soit augmenter la phase de démarrage d'une valeur différente d'un multiple de 180 degrés électriques si le rotor n'a pas bougé par rapport au stator et retourner à l'étape (b), ou bien aller à l'étape (f); et

(f) mémoriser la valeur de phase de la dernière des sommes vectorielles successives appliquée aux enroulements, ainsi la machine est maintenant prête à être mise en opération à partir de la valeur de phase mémorisée à l'étape (f).

De plus, selon la présente invention, il est également prévu un appareil pour démarrer une machine synchrone ayant un rotor et un stator muni d'enroulements, le rotor ayant une position initiale par rapport au stator, l'appareil comprenant des moyens pour initialiser une phase de démarrage d'une première somme vectorielle de sommes vectorielles successives de courants destinée à être appliquée aux enroulements, des moyens pour appliquer des sommes vectorielles successives de courants aux enroulements, chacune des sommes vectorielles successives ayant une phase, et des moyens pour détecter, pour chacune des sommes vectorielles de courants appliquée, un mouvement du rotor ainsi qu'une direction de ce mouvement par rapport au stator, l'appareil étant caractérisé en ce qu'il comprend en outre:

des moyens pour compenser, pour chaque mouvement et chaque direction qui ont été détectés, la phase d'une somme vectorielle subséquente des sommes vectorielles successives de courants appliquée aux enroulements pour ramener le rotor vers sa position initiale;

des moyens pour augmenter la phase de démarrage d'une valeur différente d'un multiple de 180 degrés électriques si le rotor, après l'application des sommes vectorielles successives de courants, n'a pas bougé par rapport au stator; et

des moyens pour mémoriser une valeur de phase de la dernière des sommes vectorielles successives appliquée au rotor, ainsi la machine est maintenant prête à être mise en opération à partir de la valeur de phase mémorisée par les moyens pour mémoriser.

Les objets, avantages et autres caractéristiques de la présente invention deviendront plus apparents à la lecture de la description non limitative qui suit de modes de réalisation préférés montrés dans les dessins ci-joints.

## BRÈVE DESCRIPTION DES DESSINS

La figure 1 est un diagramme bloc montrant un appareil pour démarrer une machine synchrone selon la présente invention;
La figure 2 est un autre diagramme bloc montrant un appareil pour démarrer une machine synchrone selon la présente invention;
Les figures 3A et 3B montrent un algorithme illustrant une méthode pour démarrer une machine synchrone selon la présente invention;
Les figures 5A, 5B et 5C montrent un diagramme bloc montrant avec plus de détails un élément montré à la figure 1;
La figure 6 est un diagramme de circuit montrant avec plus de détails une partie d'un élément montré à la figure 1; et
La figure 7 est une vue en coupe partielle d'une machine synchrone.

## DESCRIPTION DÉTAILLÉE DES DESSINS

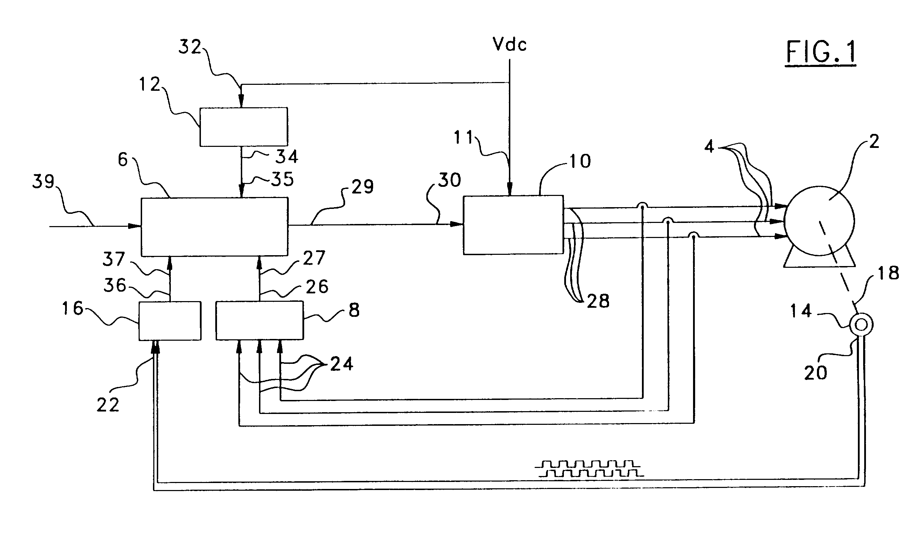

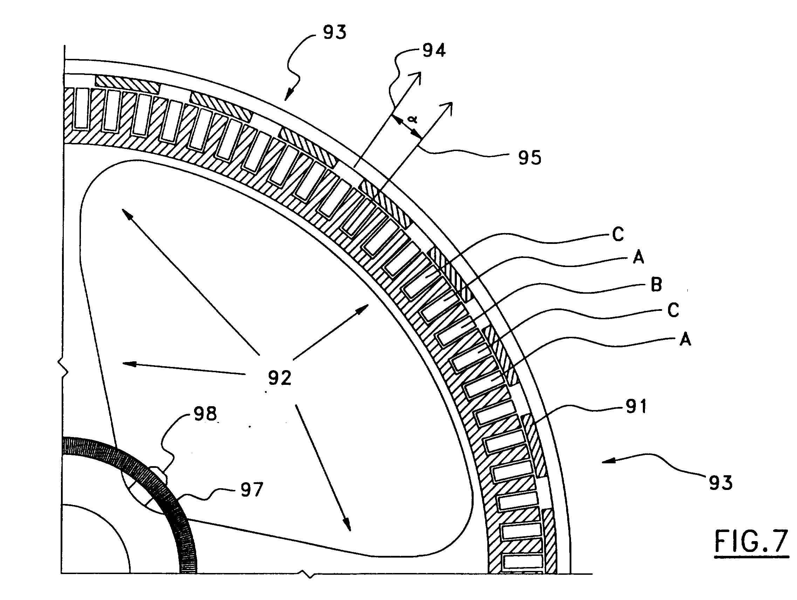

En se référant maintenant à la figure 1, il y est montré un appareil pour démarrer une machine synchrone 2 ayant un rotor (non montré) et un stator (non montré) munis d'enroulements (non montré). Le rotor et le stator muni d'enroulements sont montrés à la figure 7. Une telle machine synchrone avec un rotor et un stator muni d'enroulements est bien connue dans l'art. Le rotor a une position initiale inconnue par rapport au stator.

Par exemple, la machine synchrone est un moteur-roue d'un véhicule électrique comme celui qui est montré dans le brevet américain No 5,327,034. Comme on peut le comprendre facilement, aucun mouvement substantiel aléatoire du véhicule n'est permis durant le démarrage pour des raisons de sécurité.

L'appareil comprend des moyens pour initialiser 6 une phase de démarrage d'une première somme vectorielle de sommes vectorielles successives de courants destinée à être appliquée aux enroulements du stator au moyen des conducteurs d'alimentation 4; et des moyens pour appliquer 6, 8, 10 et 12 des sommes vectorielles successives de courants aux enroulements. Chacune des sommes vectorielles successives a une phase donnée.

L'appareil comprend également des moyens pour détecter 14 et 16, pour chacune des sommes vectorielles appliquée de courants, un mouvement du rotor de la machine 2 ainsi que la direction de ce mouvement par rapport au stator; des moyens pour compenser 6, pour chaque mouvement et chaque direction qui ont été détectés, la phase d'une somme vectorielle subséquente des sommes vectorielles successives de courants appliquée aux enroulements de la machine 2 pour ramener le rotor vers sa position initiale; et des moyens pour augmenter 6 la phase de démarrage d'une valeur différente d'un multiple de 180 degrés électriques si le rotor de la machine 2, après l'application des sommes vectorielles successives de courants, n'a pas bougé par rapport au stator.

L'appareil comprend également des moyens pour mémoriser 6 la valeur de phase de la dernière des sommes vectorielles successives appliquée au rotor de la machine 2. Ainsi la machine 2 est maintenant prête à être mise en opération à partir de la valeur de phase mémorisée dans les moyens pour mémoriser 6.

Les moyens pour détecter 14 et 16 le mouvement du rotor de la machine 2 ainsi que la direction de ce mouvement par rapport au stator comprennent un compteur bidirectionnel 16 et un encodeur par incrément 14. L'encodeur par incrément 14 a une entrée 18 reliée au rotor de la machine 2, et une sortie 20 reliée à une entrée 22 du compteur bidirectionnel 16 qui lui a une sortie 36 branchée à l'entrée 37 de l'unité de contrôle 6.

De préférence, dans le cas où la machine est un moteur-roue d'un véhicule et qu'aucun mouvement substantiel aléatoire du véhicule n'est permis, la résolution de l'encodeur par incrément 14 doit être choisie de façon appropriée de façon à être suffisamment élevée pour qu'un tout petit mouvement du rotor puisse être détecté et compensé même si le moteur-roue est immobilisé par un moyen de freinage.

Les moyens pour initialiser, les moyens pour augmenter, les moyens pour mémoriser et les moyens pour compenser font tous partie de l'unité de contrôle 6 qui est munie d'une entrée 39 pour recevoir une commande. L'unité de contrôle 6 est une unité de traitement de signal digital TM320C30 pourvue d'un logiciel d'opération.

Les moyens pour appliquer 6, 8, 10 et 12 comprennent une unité de contrôle 6 pourvue d'un logiciel d'opération; un détecteur de courant 8 ayant des entrées 24 pour détecter les courants appliqués aux enroulements de la machine 2 et une sortie numérique 26 branchée à une entrée 27 de l'unité de contrôle 6; un convertisseur 10 ayant des sorties 28 pour appliquer les sommes vectorielles successives de courants aux enroulements de la machine 2 au moyen de conducteurs d'alimentation 4, une entrée 11 pour recevoir une tension d'alimentation et une entrée 30 pour recevoir des signaux de commande d'une sortie 29 de l'unité de contrôle 6; et un détecteur de tension 12 ayant une entrée 32 pour mesurer une tension d'alimentation Vdc appliquée au convertisseur 10 et une sortie numérique 34

branchée à une entrée 35 de l'unité de contrôle 6.

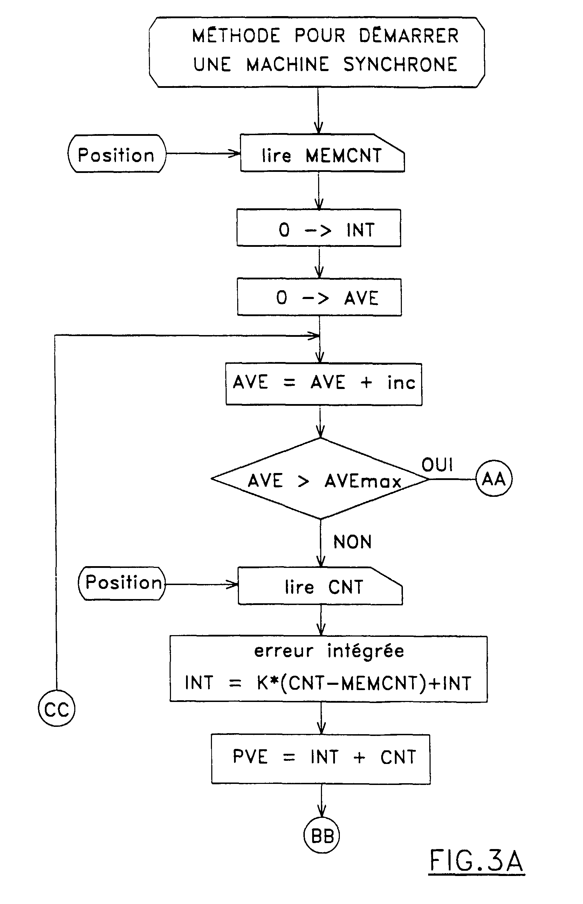

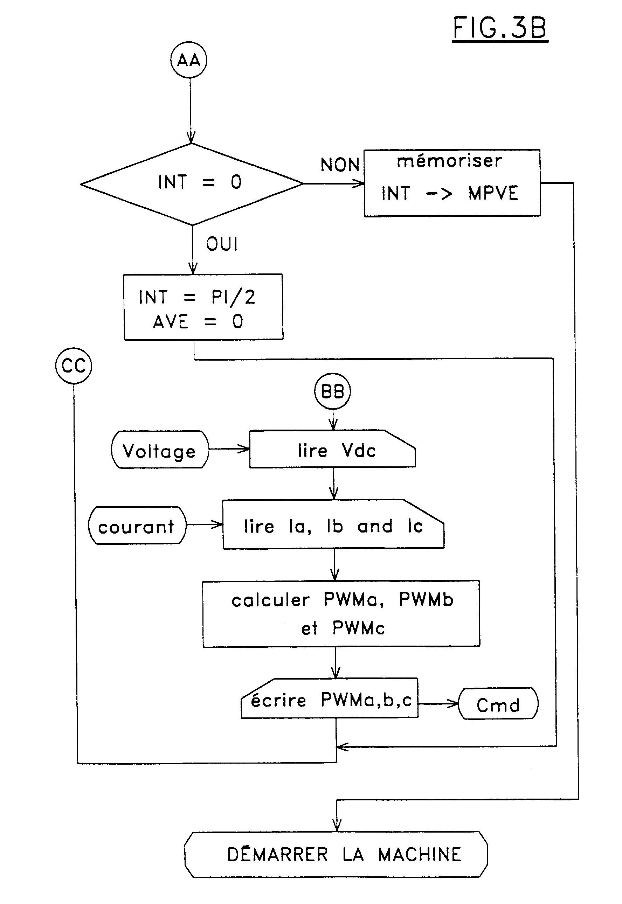

En se référant maintenant à la figure 3, il y est montré une méthode pour démarrer une machine synchrone 2 ayant un rotor et un stator muni d'enroulements. La méthode peut être réalisé par l'appareil décrit ci-dessus. Le rotor a une position initiale par rapport au stator.

La méthode comprend la première étape suivante (a) initialiser une phase de démarrage d'une première somme vectorielle de sommes vectorielles successives de courants destinée à être appliquée aux enroulements de la machine 2.

De préférence, l'étape (a) comprend les étapes suivantes (i) déterminer une position arbitraire du rotor et la mémoriser dans une variable MEMCNT; (ii) mémoriser une valeur zéro dans une variable INT qui représente l'erreur intégrée de la phase; (iii) mémoriser une valeur de zéro dans une variable AVE qui représente une amplitude; (iv) augmenter la variable AVE d'une valeur inc ayant par exemple la valeur de 0.02; (v) vérifier si la variable AVE est plus grande qu'une constante AVEmax ayant une valeur de 200 par exemple, cette condition est bien sûr toujours négative durant l'étape d'initialisation (a); (vi) détecter de nouveau la position du rotor et mémoriser cette position dans une variable CNT qui, à ce point, a la même valeur que la variable MEMCNT parce que le rotor n'a pas bougé; (vii) calculer une erreur intégrée au moyen de l'équation suivante: INT=K*(CNT-MEMCNT)+INT où K est une constante et a par exemple la valeur de -0.02, la valeur de INT demeurant la même parce que, à ce point, CNT est égal à MEMCNT; (viii) mémoriser la somme CNT et INT dans la variable PVE, qui représente la phase de la première somme vectorielle des sommes vectorielles successives de courants, (ix) détecter la tension appliquée au convertisseur et mémoriser la valeur de cette tension dans une variable Vdc; (x) détecter les trois courants appliqués à la machine 2 et mémoriser les valeurs de ces trois courants dans les variables Ia, Ib et Ic, qui à ce stade dans l'étape d'initialisation ont des valeurs de zéro; et (xi) calculer des valeurs PWMa, PWMb et PWMc à partir des valeurs de PVE, AVE, Vdc, Ia, Ib et Ic. La phase de démarrage de la première somme vectorielle des sommes vectorielles successives de courants est maintenant initialisée.

La méthode comprend aussi l'étape suivante (b) appliquer des sommes vectorielles successives de courants aux enroulements, chacune des sommes vectorielles successives ayant une phase.

De préférence, cette étape (b) comprend des étapes suivantes (xii) produire un signal de commande Cmd pour le convertisseur, identifié par le numéro 10 sur la figure 1, résultant des valeurs PWMa, PWMb et PWMc, retourner à l'étape (iv), et répéter les étapes (iv) à (xii) jusqu'à ce que la condition de l'étape (v) soit satisfaite.

Plus précisément, l'étape (b) comprend les étapes suivantes (iv) déterminer, pour chacune des sommes vectorielles successives de courant appliquée aux enroulements, une valeur d'amplitude augmentée d'une somme vectorielle subséquente des sommes vectorielles successives de courants destinée à être appliquée aux enroulements; et (v) déterminer si la valeur d'amplitude augmentée de la somme vectorielle subséquente a atteint une valeur d'amplitude prédéterminée et soit terminer l'application des sommes successives de courants appliquées à l'étape (b) et aller à l'étape (e) si la valeur d'amplitude augmentée de la somme vectorielle subséquente a atteint la valeur d'amplitude prédéterminée, ou continuer l'application des sommes vectorielles successives de l'étape (b).

De préférence, dans l'étape (b), chacune des sommes vectorielles successives de courants est appliquée aux enroulements au moyen de signaux d'impulsion modulés en largeur.

La méthode comprend aussi l'étape suivante (c) détecter, pour chacune des sommes vectorielles de courants appliquée à l'étape (b), un mouvement du rotor de la machine 2 ainsi que la direction de ce mouvement par rapport au stator. De préférence, cette étape est réalisée par les étapes (vi), (vii) et (viii) décrites ci-dessus.

La méthode comprend également l'étape suivante (d) compenser, pour chaque mouvement et chaque direction détectés à l'étape (c) la phase d'une somme vectorielle subséquente des sommes vectorielles successives de courants appliquée aux enroulements pour ramener le rotor vers sa position initiale. De préférence, cette étape est réalisée dans l'étape (xi) décrite ci-dessus où les valeurs de PWMa, PWMb et PWMc sont calculées de façon à prendre en considération la dernière erreur intégrée calculée INT par laquelle la compensation est réalisée.

De préférence, dans l'étape (d), la phase d'une somme vectorielle subséquente des sommes vectorielles successives de courants appliquée aux enroulements est compensée au moyen des équations suivantes PVE=INT+CNT, INT=K*MOV+INT1, où PVE est la phase d'une somme vectorielle subséquente des sommes vectorielles successives de courants, INT1 est l'erreur intégrée de la dernière erreur intégrée calculée, INT est l'erreur intégrée, MOV égale (CNT-MEMCNT) qui représente le mouvement et la direction de ce mouvement détectés à l'étape (c) par rapport à la position initiale, CNT est une valeur représentative de la position du rotor et K est une constante prédéterminée.

La méthode comprend également l'étape suivante (e) détecter si le rotor a bougé par rapport au stator après avoir appliqué les sommes vectorielles successives de courants pour ainsi soit augmenter la phase de démarrage d'une valeur différente d'un multiple de 180 degrés électriques, qui est de préférence 90 degrés électriques, si le rotor n'a pas bougé par rapport au stator et retourner à l'étape (b) ou aller à l'étape (f).

De préférence, l'étape (e) est réalisée après que la condition de l'étape (v) ait été considérée comme positive, et comprend l'étape suivante (xiii) vérifier si INT est égal à zéro ce qui veut dire que le rotor n'a pas bougé et, si cette condition est positive, les étapes additionnelles suivantes sont réalisées (xiv) mémoriser une valeur de 90 degrés dans la variable INT, (xv) mémoriser une valeur de zéro dans la variable AVE et retourner à l'étape (iv).

La méthode comprend également l'étape suivante (f) mémoriser, après que la condition de l'étape (e) ait été considérée comme négative, la valeur d'erreur intégrée INT de la dernière des sommes vectorielles successives appliquée aux enroulements dans une variable MPVE, ainsi la machine 2 est maintenant prête à être mise en opération à partir de la valeur d'erreur intégrée mémorisée à l'étape (f). De préférence, cette étape (f) comprend l'étape suivante (xvi) mémoriser la valeur de la variable INT dans une variable MPVE qui est la valeur de l'erreur de phase à partir de laquelle la machine est maintenant prête pour être mise en opération.

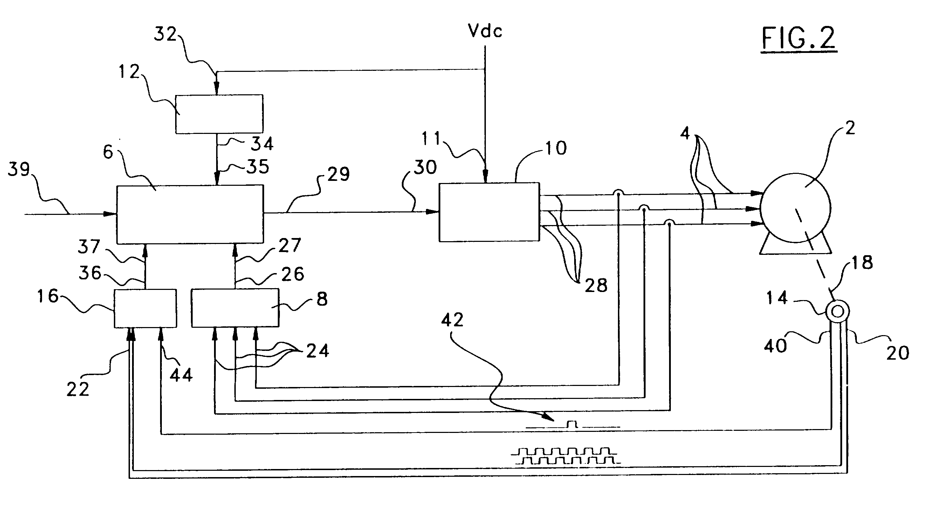

En se référant maintenant à la figure 2, on remarque que l'encodeur par incrément 14 a une seconde sortie 40 pour générer un signal d'index 42; et que le compteur bidirectionnel 16 a une entrée de charge 44 pour recevoir le signal d'index. Ainsi le signal d'index est utilisé comme un signal de charge pour confirmer la position absolue du rotor par rapport au stator lorsque le moteur synchrone est en opération.

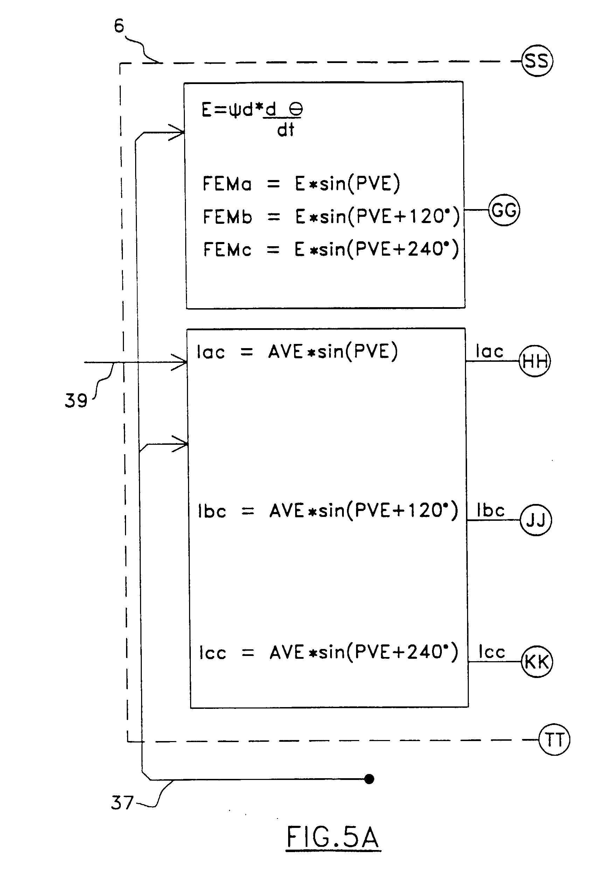

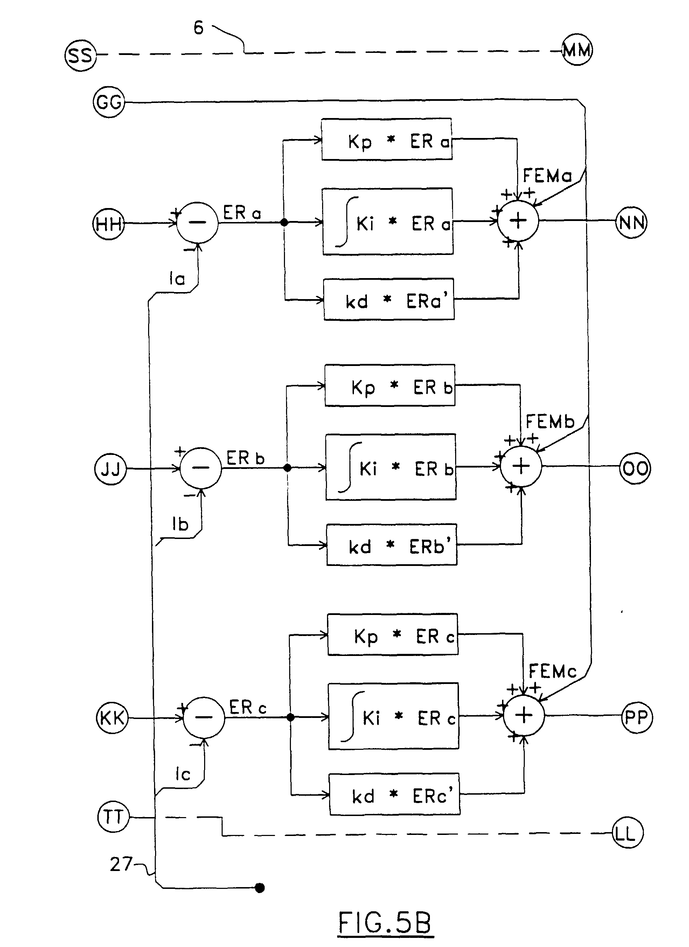

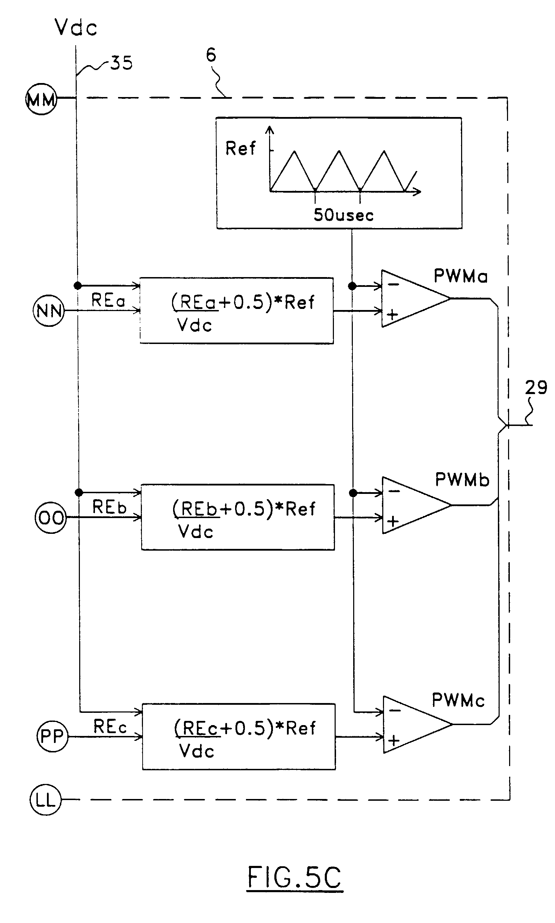

En se référant maintenant à la figure 5, il y est montré un mode de réalisation préférentiel de l'unité de contrôle 6 pour calculer les valeurs PWMa, PWMb et PWMc montrées aux figures 1 et 2. Les valeurs de courant de commande Iac, Ibc, et Icc sont calculées à partir des valeurs AVE et PVE obtenues à partir des entrées 37 et 39. Les valeurs de force contre-électromotrice FEMa, FEMb et FEMc sont calculées à partir des valeurs PVE, $\theta$ et $\psi$d où $\psi$d est une constante représentative d'une force magnétomotrice. Les valeurs d'erreur ERa, ERb et ERc sont calculées à partir des valeurs de commande de courant Iac, Ibc et Icc et des valeurs de courant Ia, Ib et Ic. Les valeurs de REa, REb et REc sont calculées au moyen d'un algorithme PID (Proportionnel Intégral Différentiel) qui utilise des valeurs de FEMa, FEMb et FEMc. Les valeurs de PWMa, PWMb et PWMc sont calculées à partir des valeurs de Vdc, REa, REb et REc et sont appliquées à la sortie 29.

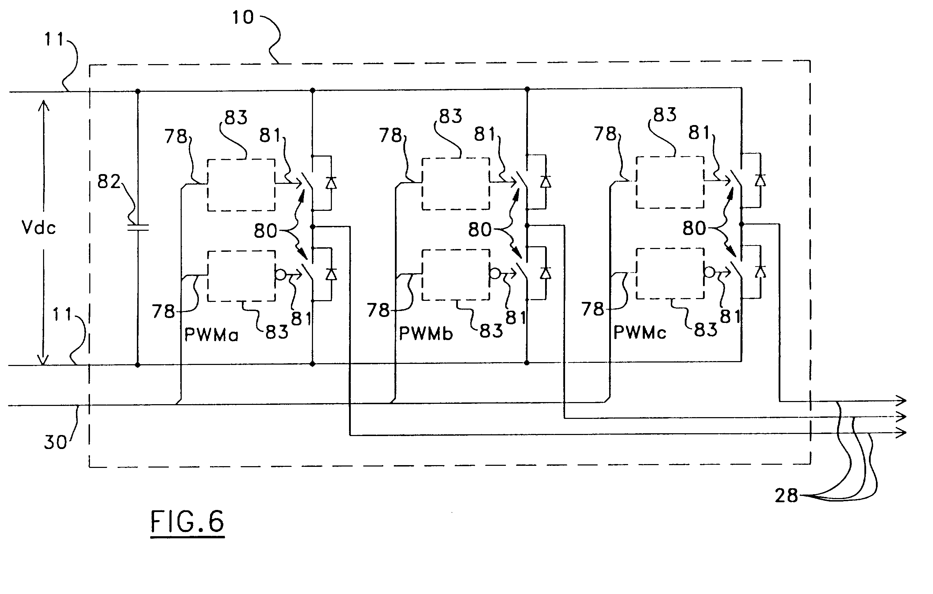

En se référant maintenant à la figure 6, il y est montré un mode de réalisation préférentiel du convertisseur 10 montré aux figures 1 et 2. Le convertisseur de puissance 10 est utilisé pour appliquer des courants à la machine synchrone 2 (montré aux figures 1 et 2) via les sorties 28. Six interrupteurs de puissance 80 d'un type IGBT sont branchés à l'alimentation Vdc via l'entrée 11. Les interrupteurs de puissance ont des entrées 81 pour recevoir les signaux de commande à partir des sorties des pilotes de gâchette 83. Ces pilotes de gâchette 83 ont des entrées 78 pour recevoir les signaux de commande PWMa, PWMb et PWMc via l'entrée 30. Un condensateur de puissance 82 est branché dans l'entrée 11 pour filtrer l'alimentation Vdc.

En se référant maintenant à la figure 7, il y est montré une vue en coupe partielle de la machine synchrone. Les enroulements de phase A, B et C sont montés sur le stator 92. Des aimants 91 sont montés sur le rotor 93. La valeur de MPVE est la valeur de l'angle $\alpha$ entre la position vectorielle 94 du rotor 93 et la position vectorielle 95 du stator 92. Les moyens pour détecter le mouvement du rotor 93 ainsi que la direction de ce mouvement par rapport au stator 92 comprennent un anneau d'encodage 97 coopérant avec une tête de lecture d'encodage fixe 98.

À titre d'exemple, un listage complet du logiciel utilisé pour démarrer une machine synchrone suit:

```
/**********************************************************/
/*                    programme MOT                       */
/**********************************************************/


static unsigned int *CONTMIX=(unsigned int*)0x800000u;
     /*Contr.Mix Bus */
static unsigned int *CONTACQ   = (unsigned int *)0x804000u;
     /*Contr.Carteacq*/
static unsigned int *CONTDMA   = (unsigned int *)0x808000u;
     /*Contr.DMA     */
static unsigned int *CONTIM1   = (unsigned int *)0x808030u;
     /*Contr.Timer1  */


#include <v:\SOURCE\MOT\VMOTOV31.H> /*insert vecteur VECT */
#include <v:\SOURCE\MOT\SINU1.H>  /* insert vecteur SINUS */


static VVV   *VECT1;             /* definir pointeur VECT1*/
static float *SINUS;             /* definir pointeur SINUS*/


extern INT_02();                 /*definir pointeur inter.*/


/**********************************************************/
/********   DEBUT PROGRAMME CALCUL 20KHz   ***************/
/**********************************************************/


INT_02()
 {


/***********   RESET ET DISABLE INT.#02   ***************/
```

```
asm("          LDI  0Ah          ,R0  ");
asm("          STI  R0           ,*AR0");
        /* enable reset INT MIX 4283 */


/*************** PULSE TIMER #01 OUT A ON   *************/


asm("          LDI  206h         , R7  ");
asm("          STI  R7           ,*AR5 ");


/*   TRANSFERT DMAOUT                     */
#include <v:\SOURCE\MOT\DMAOUT.H>


/*   ACQUISITION DE LA POSITION          */
#include <v:\SOURCE\MOT\ACQPOS20.H>


/*   ACQUISITION DE LA VITESSE ET ACCEL.  */
#include <v:\SOURCE\MOT\ACQVIAC2.H>


/*   CALCUL DE AMPL                       */
#include <v:\SOURCE\MOT\CALAMP.H>


/*   CALCUL DE Iac Ibc ET Icc            */
#include <v:\SOURCE\MOT\CALIABC.H>


/*   ACQUISITION DE Iabc ET NORMALISATION */
#include <v:\SOURCE\MOT\ACQIABC.H>


/*   INITIALISATION CALCUL OFFSET         */
#include <v:\SOURCE\MOT\INIOFFS.H>


/*   ORGANE DE REGULATION                 */
#include <v:\SOURCE\MOT\CALPID.H>


/*   CALCUL DE FEM EA,EB,EC               */
#include <v:\SOURCE\MOT\CALFEM.H>
```

```
/*   ACQUISITION DE Vdc ET NORMALISATION   */
#include <v:\SOURCE\MOT\ACQVDC.H>


/*   ACQUISITION DE COUPLE ET NORMALISATION */
#include <v:\SOURCE\MOT\ACQCOUP.H>


/*   CALCUL DE VAC                        */
#include <v:\SOURCE\MOT\CALVABC.H>


/*   CALCUL POUR OUT FPGA                 */
#include <v:\SOURCE\MOT\OUTFPGA.H>


/*   transfert DMAIN                      */
#include <v:\SOURCE\MOT\DMAIN.H>


/*   PULSE TIMER #01 OUT A OFF            */

asm("NDMAIN  LDI  202h       , R7  ");
asm("        STI  R7         ,*AR5 ");


/*   ENABLE INTERRUPT MIX ET C30         */

asm("        LDI  0          ,IF  ");
asm("        LDI  14         ,R0  ");/*enable INT MIX 4283*/
asm("        STI  R0         ,*AR0");
asm("        OR   2000h      ,ST  "); /* set GIE enable   */


  }
/*********************************************************/
/*******      FIN PROGRAMME CALCUL 20KHz  ***************/
/*********************************************************/
main()
{
    SINUS = SINUS1;  /*l'adr. de depart de SINUS*/
    VECT1 = &VECT;   /*l'adr. de depart de VECT */
```

```
/********* INIT. EXPANSION BUS ET VECT. INT. #02 **********/


*(unsigned int *)0x808060 = 0x78;/* exp. bus wait state=3 */
*(unsigned int *)0x809808 = (int)&INT_02 | 0x60000000;
        /* set vect.int02*/


/*   TRANSFERT VECTEUR DANS DRAM          */
#include <v:\SOURCE\MOT\TRANVEC.H>


/*   SET L'ADRESSE DES POINTEURS          */
#include <v:\SOURCE\MOT\SETADD.H>


/*   INIT. CARTE D'ACQUISITION            */
#include <v:\SOURCE\MOT\INIACQ.H>


/*   DEPART DU SYSTEME INTERRUPT          */
#include <v:\SOURCE\MOT\DEPINT.H>


/*********        boucle sans fin          *****************/
    asm("LAB1:    NOP");
    asm("         NOP");
    asm("         NOP");
    asm("         BRD     LAB1");
    asm("         NOP");
    asm("         NOP");
    asm("         NOP");
    asm("         NOP");


}
typedef struct
 {
/****************** CONSIGNES  ******************/
/* 0   */ unsigned int              STATUS_VE;
/* 1   */        float  Tcons;
/* 2   */        float             Pdisp;
/* 3   */        float             X3;
```

```
/* 4   */          float  Vcons;                    /* motf.c
*/
/* 5   */ unsigned int    Phase;
/* 6   */          float kteta;                     /* initenc
*/
/* 7   */          float tinc;                      /* initenc
*/
/* 8   */          float tpred;                     /* initenc
*/
/* 9   */          float  _Inert;                   /* motfl.c
*/
/* 10  */          float  IntW;                     /* motf.c
*/
/* 11  */          float  KpW;                      /* motf.c
*/

/****************** CONSTANTES ******************/
/* 12  */          float  KP;
/* 13  */          float  KPTETA;                   /* INITENC
*/
/* 14  */          float  KD2;
/* 15  */          float  OFS_X;
/* 16  */          float  KI1;
/* 17  */          float  Imax;
/* 18  */          float  Cphase;
/* 19  */          float  XVdc;
/* 20  */          float  KOUT1;
/* 21  */          float  KOUT2;
/* 22  */          float  BORNE_I;
/* 23  */          float  NO_Iabce;
/* 24  */          float  NO_Dist;
/* 25  */          float  NO_Temps;
/* 26  */          float  NO_Vdce;
/* 27  */          float  PSI;
/* 28  */          float  AVA_PHASE;
/* 29  */          float  _15PSI;
/* 30  */          float  NO_Tc;
```

```
/* 31 */            float  NO_Temp1;                        /* motf1.c */
/* 32 */            float  NO_Temp2;                        /* motf1.c */
/* 33 */ unsigned int              X33;
/* 34 */ unsigned int              X34;
/* 35 */ unsigned int              X35;
/* 36 */ unsigned int              X36;
/* 37 */ unsigned int              X37;
/* 38 */ unsigned int V_vecom;
/* 39 */ unsigned int V_prog;
/* 40 */ unsigned int V_vers;
/* 41 */ unsigned int              X41;
/* 42 */ unsigned int              X42;
/* 43 */ unsigned int              X43;
/* 44 */ unsigned int              X44;
/* 45 */ unsigned int              X45;
/* 46 */ unsigned int              X46;
/* 47 */ unsigned int              X47;
/* 48 */ unsigned int              X48;
/* 49 */ unsigned int              X49;
/* 50 */ unsigned int              X50;
/* 51 */ unsigned int              X51;
/* 52 */            float emboit;
/* 53 */            float Borne1W;                /* motf.c */
/* 54 */            float Filte1;
/* 55 */            float Filte2;
/* 56 */            float Periode;
/* 57 */            float X_INTEG;
/* 58 */ unsigned int VECT_DRAM;
/* 59 */ unsigned int ADR_OSCIL;
/* 60 */ unsigned int              X60;
/* 61 */ unsigned int PROGCARTEACQUIT;
/* 62 */ unsigned int LIRECARTEPROT;
/* 63 */ unsigned int LIRECARTEACQUIT;
/******************* MESURE CALCUL ****************/
```

```
/* 64 */ unsigned int                  STATUS_MR;
/* 65 */          float  dPmec;
/* 66 */          float  Wmec;
/* 67 */          float  Amec;
/* 68 */          float  Treel;
/* 69 */          float  TcW;           /* motf.c */
/* 70 */          float         Temp_r;
/* 71 */          float         Temp_s;
/* 72 */          float  Vdc;
/* 73 */ unsigned int    EnerP;
/* 74 */ unsigned int    EnerN;
/* 75 */          float  Iq;
/* 76 */          float  Puis;
/* 77 */          float              X77;
/* 78 */          float              X78;
/* 79 */          float  TETAF;
/* 80 */          float  Temp1;          /* motfl.c */
/* 81 */          float  Temp2;          /* motfl.c */
/* 82 */          float              X82;
/* 83 */          float  Tconsl;
/******************* VARIABLES *******************/
/* 84 */          float  IA;
/* 85 */          float  IB;
/* 86 */          float  IC;
/* 87 */ unsigned int    TETA;
/* 88 */          float  EA;
/* 89 */          float  EB;
/* 90 */          float  EC;
/* 91 */          float  IAC;
/* 92 */          float  IBC;
/* 93 */          float  ICC;
/* 94 */          float              X94;
/* 95 */          float              X95;
/* 96 */          float              X96;
/* 97 */          float  VAC;
/* 98 */          float  VBC;
```

```
/* 99  */        float  VCC;
/* 100 */        float  IMVA;
/* 101 */        float  IMVB;
/* 102 */        float  IMVC;
/* 103 */        float  prot_dcmax;
/* 104 */        float  prot_dcmin;
/* 105 */        float  prot_dc;
/* 106 */ unsigned int                    X106;
/* 107 */ unsigned int                    X107;
/* 108 */ unsigned int                    X108;
/* 109 */ unsigned int                    X109;
/* 110 */ unsigned int    TRIG_OSCIL;
/* 111 */ unsigned int    CALVIT;
/* 112 */ unsigned int    CntEnerg;
/* 113 */ unsigned int    TETA_INI;      /* initenc */
/* 114 */ float           SomEnerP;
/* 115 */ float           SomEnerN;
/* 116 */ float           DTET;          /* INITENC */
/* 117 */ float           teta_SOM;      /* initenc */
/* 118 */ float           tsom;          /* initenc */
/* 119 */ unsigned int    DTETAVI;
/* 120 */ unsigned int    COMPT_OSCIL;
/* 121 */ float           SOM_OFSIA;
/* 122 */ float           SOM_OFSIB;
/* 123 */ float           SOM_OFSIC;
/* 124 */ unsigned int    CAL_OFS;
/* 125 */        float  _Vdc;
/* 126 */        float  INTW;            /* motf.c */
/* 127 */        float          X127;
/* 128 */        float  ERAD1;
/* 129 */        float  ERBD1;
/* 130 */        float  ERCD1;
/* 131 */        float  ERAED1;
/* 132 */        float  ERBED1;
/* 133 */        float  ERCED1;
/* 134 */        float  OFS_IA;
```

```
/* 135 */          float  OFS_IB;
/* 136 */          float  OFS_IC;
/* 137 */          float  ERAEI1;
/* 138 */          float  ERBEI1;
/* 139 */          float  ERCEI1;
 }VVV;


static VVV VECT =
    {
/******************** CONSIGNES  ********************/
/* 0     unsigned int              STATUS_VE; */     0,
/* 1             float   Tcons;                */     0.0,
/* 2             float              Pdisp; */         0.0,
/* 3             float              X3; */            0.0,
/* 4             float   Vcons;                */     0.0,   /* motf.c
*/
/* 5    unsigned int    Phase;                 */     182,
/* 6             float   kteta;                */    -6E-3,  /* initenc
*/
/* 7             float   tinc;                 */     2E-2,  /* initenc
*/
/* 8             float   tpred;                */     300.0, /* initenc
*/
/* 9             float   _Inert;               */     18.4E-3,
/* 10            float   IntW;                 */     0.010, /* motf.c
*/
/* 11            float   KpW;                  */     30.0,   /* motf.c
*/
/******************** CONSTANTES ********************/
/* 12            float   KP;                   */     1.5,
/* 13            float   KPTETA;               */    -5.0,
/* 14            float   KD2;                  */     0.0,
/* 15            float   ofs_x;                */    -0.001,
/* 16            float   KI1;                  */     0.5,
/* 17            float   Imax;                 */     350.0,
/* 18            float   Cphase;               */     0.041,
```

```
/* 19          float  XVdc;              */   0.48,
/* 20          float  KOUT1;             */   512.0,
/* 21          float  KOUT2;             */   255.5,
/* 22          float  BORNE_I;           */   40.0,
/* 23          float  NO_Iabc;           */   -0.183,
/* 24          float  NO_Dist;           */   1.53398E-3,
/* 25              float   NO_Temps;                    */
100.0,/*195.3125E-9,12msec.*/
/* 26          float  NO_Vdce;           */   0.31279,
/* 27          float  PSI;               */   2.6089,
/* 28          float  AVA_PHASE;         */   0.048,
/* 29          float  _1.5PSI;           */   0.24867,
/* 30          float  NO_Tc;             */   0.0,
/* 31          float  NO_Temp1;          */   0.24425,     /*
motfl.c */
/* 32          float  NO_Temp2;          */   0.24425,     /*
motfl.c */
/* 33  unsigned int              X33; */   0,
/* 34  unsigned int              X34; */   0,
/* 35  unsigned int              X35; */   0,
/* 36  unsigned int              X36; */   0,
/* 37  unsigned int              X37; */   0,
/* 38  unsigned int  V_vecom;           */   9410200,
/* 39  unsigned int  V_prog;            */   31010,
/* 40  unsigned int  V_vers;            */   31000,
/* 41  unsigned int              X41; */   0,
/* 42  unsigned int              X42; */   0,
/* 43  unsigned int              X43; */   0,
/* 44  unsigned int              X44; */   0,
/* 45  unsigned int              X45; */   0,
/* 46  unsigned int              X46; */   0,
/* 47  unsigned int              X47; */   0,
/* 48  unsigned int              X48; */   0,
/* 49  unsigned int              X49; */   0,
/* 50  unsigned int              X50; */   0,
/* 51  unsigned int              X51; */   0,
```

16

```
/* 52              float    emboit;                    */    0.04,
/* 53                float    BorneIW;                   */   600.0,          /*
motf.c */
/* 54              float    Filtrel;                   */    0.05,
/* 55              float    Filtre2;                   */    0.95,
/* 56              float    Periode;                   */    50.0e-6,
/* 57              float    X_INTEG;                   */    0.333333,
/* 58   unsigned int    DRAMIN ;                   */    0x200002,
/* 59   unsigned int    ADR. OSCIL.;               */    0x200100,
/* 60   unsigned int                      X60; */    0x0,
/* 61   unsigned int    PROG.CARTE ACQU.;      */    0x18000,
/* 62   unsigned int    LIRE CARTE PROT.;      */    0x10000,
/* 63   unsigned int    LIRE CARTE ACQU.;      */    0x38000,
/******************* MESURE CALCUL ***************/
/* 64   unsigned int             STATUS_MR; */    0,
/* 65              float   dPmec;                      */    0.0,
/* 66              float   Wmec;                       */    0.0,
/* 67              float   Amec;                       */    0.0,
/* 68              float   Treel;                      */    0.0,
/* 69                float   Tcw;                       */    0.0,    /* mot.c
*/
/* 70              float                 Temp_r; */    0.0,
/* 71              float                 Temp_s; */    0.0,
/* 72              float   Vdc;                        */    0.0,
/* 73   unsigned int    EnerP;                      */    0,
/* 74   unsigned int    EnerN;                      */    0,
/* 75              float   Iq;                         */    0.0,
/* 76              float   Puis;                       */    0.0,
/* 77              float                 X77;    */    0.0,
/* 78              float                 X78;    */    0.0,
/* 79                float   TETAF;                     */    0.0,
/* 80              float   Temp1;                      */    0.0,    /* motfl.c
*/
/* 81              float   Temp2;                      */    0.0,    /* motfl.c
*/
/* 82              float                 X82; */    0.0,
```

```
/* 83              float  Tcon1;                    */   0.0,
/******************* VARIABLES *******************/
/* 84              float  IA;                       */   0.0,
/* 85              float  IB;                       */   0.0,
/* 86              float  IC;                       */   0.0,
/* 87    unsigned int     TETA;                     */   0,
/* 88              float  EA;                        */   0.0,
/* 89              float  EB;                        */   0.0,
/* 90              float  EC;                        */   0.0,
/* 91              float  IAC;                       */   0.0,
/* 92              float  IBC;                       */   0.0,
/* 93              float  ICC;                       */   0.0,
/* 94              float                  X94; */   -4.31,
/* 95              float                  X95; */    4.31,
/* 96              float                  X96; */    0.0,
/* 97              float  VAC;                       */   0.0,
/* 98              float  VBC;                       */   0.0,
/* 99              float  VCC;                       */   0.0,
/* 100             float  IMVA;                      */   0.0,
/* 101             float  IMVB;                      */   0.0,
/* 102             float  IMVC;                      */   0.0,
/* 103             float  prot_dcmax;                */   550.0,
/* 104             float  prot_dcmin;                */   500.0,
/* 105             float  prot_dc;                   */   490.0,
/* 106   unsigned int                 X106;*/   0,
/* 107   unsigned int                 X107;*/   0,
/* 108   unsigned int                 X108;*/   0,
/* 109   unsigned int                 X109;*/   0,
/* 110   unsigned int     TRIG_OSCIL;              */   0,
/* 111   unsigned int     CALVIT;                  */   0,
/* 112   unsigned int     CntEnerg;                */   0,
/* 113   unsigned int     TETA_INI;                */   0,
/* 114   float            SomEnerP;                */   0.0,
/* 115   float            SomEnerN;                */   0.0,
/* 116   float            DTET                     */   0.0,   /* INITENC
*/
```

```
/* 117  float            teta_SOM;              */    0.0,   /* initenc
*/
/* 118  float            tsom;                  */    0.0,   /* initenc
*/
/* 119  unsigned int     DTETAVI;               */    0,
/* 120  unsigned int     COMPT_OSC;             */    0,
/* 121  float            SOM_OFSIA;             */    0,
/* 122  float            SOM_OFSIB;             */    0,
/* 123  float            SOM_OFSIC;             */    0,
/* 124  unsigned int     CAL_OFS;               */    1001,
/* 125            float  1/Vdc;                 */    0,
/* 126            float  IntW;                  */    0.0, /* motf.c */
/* 127            float                   X127;*/    0.0,
/* 128            float  ERAD1;                 */    0.0,
/* 129            float  ERBD1;                 */    0.0,
/* 130            float  ERCD1;                 */    0.0,
/* 131            float  ERAED1;                */    0.0,
/* 132            float  ERBED1;                */    0.0,
/* 133            float  ERCED1;                */    0.0,
/* 134            float  OFS_IA;                */    0.0,
/* 135            float  OFS_IB;                */    0.0,
/* 136            float  OFS_IC;                */    0.0,
/* 137            float  ERAEI1;                */    0.0,
/* 138            float  ERBEI1;                */    0.0,
/* 139            float  ERCEI1;                */    0.0
     };

     0.0000,
     0.0246,
     0.0493,
     0.0739,
     0.0984,
     0.1229,
     0.1473,
     0.1716,
     0.1958,
```

0.2199,

0.2439,

0.2677,

0.2914,

0.3149,

0.3382,

0.3612,

0.3841,

0.4067,

0.4291,

0.4512,

0.4731,

0.4947,

0.5159,

0.5369,

0.5575,

0.5778,

0.5977,

0.6173,

0.6365,

0.6553,

0.6737,

0.6917,

0.7093,

0.7264,

0.7431,

0.7594,

0.7752,

0.7905,

0.8054,

0.8197,

0.8336,

0.8470,

0.8598,

0.8721,

0.8839,

0.8952,

0.9059,

0.9160,

0.9256,

0.9347,

0.9432,

0.9511,

0.9584,

0.9651,

0.9713,

0.9768,

0.9818,

0.9862,

0.9900,

0.9932,

0.9957,

0.9977,

0.9991,

0.9998,

1.0000,

0.9995,

0.9985,

0.9968,

0.9945,

0.9916,

0.9882,

0.9841,

0.9794,

0.9741,

0.9683,

0.9618,

0.9548,

0.9472,

0.9390,

0.9302,

0.9209,

0.9110,

0.9006,

0.8896,

0.8781,

0.8660,

0.8534,

0.8403,

0.8267,

0.8126,

0.7980,

0.7829,

0.7674,

0.7513,

0.7348,

0.7179,

0.7005,

0.6827,

0.6645,

0.6459,

0.6269,

0.6075,

0.5878,

0.5677,

0.5472,

0.5264,

0.5053,

0.4839,

0.4622,

0.4402,

0.4180,

0.3955,

0.3727,

0.3497,

0.3265,

0.3032,

0.2796,

```
0.2558,
0.2319,
0.2079,
0.1837,
0.1595,
0.1351,
0.1107,
0.0861,
0.0616,
0.0370,
0.0123,
-0.0123,
-0.0370,
-0.0616,
-0.0861,
-0.1107,
-0.1351,
-0.1595,
-0.1837,
-0.2079,
-0.2319,
-0.2558,
-0.2796,
-0.3032,
-0.3265,
-0.3497,
-0.3727,
-0.3955,
-0.4180,
-0.4402,
-0.4622,
-0.4839,
-0.5053,
-0.5264,
-0.5472,
-0.5677,
```

-0.5878,
-0.6075,
-0.6269,
-0.6459,
-0.6645,
-0.6827,
-0.7005,
-0.7179,
-0.7348,
-0.7513,
-0.7674,
-0.7829,
-0.7980,
-0.8126,
-0.8267,
-0.8403,
-0.8534,
-0.8660,
-0.8781,
-0.8896,
-0.9006,
-0.9110,
-0.9209,
-0.9302,
-0.9390,
-0.9472,
-0.9548,
-0.9618,
-0.9683,
-0.9741,
-0.9794,
-0.9841,
-0.9882,
-0.9916,
-0.9945,
-0.9968,

-0.9985,

-0.9995,

-1.0000,

-0.9998,

-0.9991,

-0.9977,

-0.9957,

-0.9932,

-0.9900,

-0.9862,

-0.9818,

-0.9768,

-0.9713,

-0.9651,

-0.9584,

-0.9511,

-0.9432,

-0.9347,

-0.9256,

-0.9160,

-0.9059,

-0.8952,

-0.8839,

-0.8721,

-0.8598,

-0.8470,

-0.8336,

-0.8197,

-0.8054,

-0.7905,

-0.7752,

-0.7594,

-0.7431,

-0.7264,

-0.7093,

-0.6917,

```
                -0.6737,
                -0.6553,
                -0.6365,
                -0.6173,
                -0.5977,
                -0.5778,
                -0.5575,
                -0.5369,
                -0.5159,
                -0.4947,
                -0.4731,
                -0.4512,
                -0.4291,
                -0.4067,
                -0.3841,
                -0.3612,
                -0.3382,
                -0.3149,
                -0.2914,
                -0.2677,
                -0.2439,
                -0.2199,
                -0.1958,
                -0.1716,
                -0.1473,
                -0.1229,
                -0.0984,
                -0.0739,
                -0.0493,
                -0.0246,
                -0.0246,
/******  TRANSFERT.VECTEUR C30 AU FONCTION VEHICULE ******/
/* prepare transfert vecteur vers fonction vehicule */
asm("        LDI  @_VECT+58  ,AR7 ");
        /* store ad. DRAM -> AR7  */
asm("        LDI 0h           ,BK ");
```

```
asm("        STI BK      ,*+AR2(0)");
asm("        ADDI 64         ,AR7 ");
        /* set adr.DESTDMA=200042 */
asm("        STI AR7     ,*+AR2(6)");
        /* store DESTDMA -> AR2(6)*/
asm("        LDI AR4         ,AR7 ");
asm("        ADDI 64         ,AR7 ");
        /*set adr.SRCDMA=@VECT+40h*/
asm("        STI AR7     ,*+AR2(4)");
        /* store SRCDMA  -> AR2(4)*/
asm("        LDI 40          ,R7  ");
asm("        STI R7      ,*+AR2(8)");
        /* store n=40 dans  AR2(8)*/
asm("        LDI 0C53h       ,R7  ");


/* verifi si j'ai le droit d'ecrire */
asm("        LDI  @_VECT+58  ,AR7 ");
        /* store ad. DRAM -> AR7  */
asm("        LDI  0fh        ,R1 ");
asm("        CMPI *-AR7(2)   ,R1 ");
        /* 0fh - mem(20 0000)     */
asm("        BN DMAOUT           ");


/* lance le transfert si < 10 */
asm("        STI R7      ,*+AR2(0)");
        /* store config.DMA AR2(0)*/


/* watch dog laisse une trace */
asm("        LDI 3h          ,R7     ");
asm("        STI R7      ,*-AR7(2) ");


/******    ACQUISITION DE LA POSITION          ****/


asm("DMAOUT LDI  *+AR1(0)   ,R1  ");
        /* acquis. de POSI.(FPGA) */
asm("        LDI   R1        ,IR0 ");
```

```
        /* store dans IR0          */


/*asm("        ADDI  @_VECT+5   ,IR0 ");*/
asm("          ADDI  172        ,IR0 ");
asm("          AND   0FFh       ,IR0 ");
        /* normal. a 8 bits        */


/*(INIT. ENCODEUR) SI VOIE INDEX, RESET Teta_comp. ET BIT_MR(2)=1*/
asm("          LDF   @_VECT+118 ,R2 ");
        /* TSOM      -> R2          */
asm("          LDF   @_VECT+117 ,R3 ");
        /* TETA_SOM -> R3          */
asm("          LDF   R3         ,R6 ");
asm("          LDI   0          ,R4 ");
        /* ST_MR                   */


/***** TEST SI INDEX *****/
asm("          LSH   -27        ,R1 ");


/***** OUI INDEX *****/
asm("          LDFC  0          ,R2 ");
        /* 0 -> TSOM              */
asm("          LDFC  0          ,R3 ");
        /* 0 -> TETA_SOM         */
asm("          LDIC  4          ,R4 ");
        /* BIT_MR(2) = 1         */


/***** TEST SI INITIALISATION *****/
asm("          LDI   @_VECT+0   ,R1 ");
        /* NAND 64 -> R1          */
asm("          ANDN  @_VECT+64  ,R1 ");
        /* 0 AND 64 -> R1         */
asm("          LSH   -3         ,R1 ");
        /* SI INIT BRANCHE INITEN */
asm("          BC    INITEN         ");
```

```
/***** NON INITIALISATION *****/
asm("           LDF    0             ,R2 ");;
        /* 0 -> TSOM                  */
asm("           BR     NOINIT1        ");
        /* BRANCHE NOINIT1            */


/***** OUI INITIALISATION *****/
asm("INITEN  LDI    @_VECT+113 ,R5 ");
        /* TETA_INIT -> R5           */
asm("           CMPF   0             ,R2 ");
        /* TSOM - 0                   */


/***** SI DEPART INITIALISATION *****/
asm("           LDIEQ IR0           ,R5 ");
        /*SITSOM=0,IR0->TETA_INIT */
asm("           LDFEQ 0             ,R3 ");
        /* 0 -> TETA_SOM              */



/***** INTEGRAL TETA ET COUPLE *****/
asm("           SUBI3 R5,IR0      ,R7 ");
        /* TETA-TETA_INIT -> R7    */
     /* COMPENSE DELTA TETA */
asm("           LDI    0             ,R6  ");
asm("      .    CMPI   7Fh           ,R7  ");
asm("           LDIP  -100h          ,R6  ");
asm("           CMPI  -7Fh           ,R7  ");
asm("           LDIN   100h          ,R6  ");
asm("           ADDI   R6            ,R7  ");
        /* delta teta -> R7          */


/* SI DELTA_TETA >10, TETA_INIT = IR0 */
asm("           ABSI   R7            ,R6  ");
        /* ABSOLU(delta teta) -> R6*/
asm("           CMPI   10            ,R6  ");
        /* R6 - 10                    */
```

```
asm("        LDIP   IRO        ,R5  ");
      /*SI POSITIF, TETA_INIT=IRO*/
asm("        LDIP   0          ,R7  ");
      /*SI POSITIF, DELTA_TETA=0 */


asm("        LDFP   10         ,R2  ");
asm("        FLOAT  R7         ,R7  ");
      /* FLOAT (TETA-TETA_INIT)  */
asm("        LDF    R7         ,R6 ");
asm("        STF    R7  ,@_VECT+116");
asm("        MPYF   @_VECT+6   ,R7 ");
      /* KTETA*(TETA-TETA_INIT)  */
asm("        ADDF   R7         ,R3 ");
/*TETA_SOM+KTETA*(TETA-TETA_INIT)*/
asm("        MPYF   @_VECT+13  ,R6 ");
      /* KTETA*(TETA-TETA_INIT)  */
asm("        ADDF   R3         ,R6 ");
      /* TSOM+TINC -> R2         */
asm("        ADDF   @_VECT+7   ,R2 ");
      /* TSOM+TINC -> R2         */


/**** TEST SI TERMINE *****/
asm("        CMPF   @_VECT+8   ,R2 ");
      /* TSOM - TPRED           */
asm("        BN     NOINIT1       ");


/**** OUI TERMINE *****/
asm("        LDI    4          ,R4 ");
      /* BIT_MR(2) = 1          */
asm("        LDF    0          ,R2 ");
      /* 0 -> TSOM              */
asm("        ADDF   64         ,R6 ");
      /* ADDIT 90 DEGRE         */
asm("        LDF    R6         ,R3 ");


/***** FIN *****/
```

```
asm("NOINIT1 STF   R3 ,@_VECT+117 ");
asm("         STF   R2 ,@_VECT+118 ");
asm("         OR    @_VECT+64 ,R4 ");
        /* BIT_MR(2) = 1            */
asm("         STI   R4  ,@_VECT+64 ");
        /* BIT_MR(2) = 1            */
asm("         FIX   R6         ,R6 ");
asm("         ADDI  R6         ,IRO ");
asm("         STI   R5  ,@_VECT+113");


/***** (FIN PARTIE 1 DE INIT. ENCODEUR) *****/


asm("         AND   OFFh      ,IRO ");
        /* normal. a 8 bits     */
asm("         STI   IRO  ,@_VECT+87");
        /* store TETA           */


asm("         FLOAT IRO        ,R7 ");
asm("         STF   R7   ,@_VECT+79");


asm("         LDI  @_VECT+58  ,AR7 ");
        /* store ad. DRAM -> AR7  */
asm("         LDI  *-AR7(2)   ,R7 ");
asm("         CMPI 11h        ,R7 ");
asm("         BNE  DTETA          ");
asm("         CMPI 0h         ,BK ");
asm("         LDIEQ 1h        ,BK ");
asm("         LDIEQ 0h        ,RS ");


asm("DTETA    LDI   0h        ,R0 ");  /* CALCUL dteta */
asm("         SUBI3 RE,IRO    ,RC ");
asm("         LDI   ·IRO      ,RE ");
asm("         CMPI  7Fh       ,RC ");
asm("         LDIP -100h      ,R0 ");
asm("         CMPI -7Fh       ,RC ");
asm("         LDIN  100h      ,R0 ");
```

```
asm("          ADDI  R0         ,RC  ");
asm("          ADDI  RC         ,RS  ");


asm("NDTETA  CMPI 2h           ,R7 ");
asm("          BEQ  LECT              ");
asm("          FLOAT RS         ,R7 ");
asm("          MPYF  @_VECT+24  ,R7 ");
asm("          STF  R7    ,@_VECT+65 ");
/******    CALCUL DE LA VITESSE ET ACCEL. *************/
/* SOMME DELTATETA */
asm("LECT    LDI  @_VECT+119  ,R1 ");
        /* DTETA -> R1            */
asm("          ADDI RC           ,R1 ");
        /* DTETA1+DTETA0 -> DTETA1 */
asm("          STI  R1  ,@_VECT+119 ");


    /* INCREMENTE N, SI < 10 msec */
asm("          LDI  @_VECT+111  ,R7 ");
asm("          ADDI 1           ,R7 ");
asm("          STI  R7  ,@_VECT+111 ");
asm("          CMPI 200         ,R7 ");
asm("          BN   FINVIT          ");
asm("          LDI   0          ,R7 ");
asm("          STI   R7 ,@_VECT+111 ");
asm("          STI   R7 ,@_VECT+119 ");


/* calcul distance */
asm("          FLOAT R1         ,R1 ");
        /* float DTETA1           */
asm("          MPYF  @_VECT+24  ,R1 ");
        /* normal. dist. (rad/sec) */


/* calcul (1/temps) */
asm("          LDF  @_VECT+25  ,R2 ");


/* calcul V */
```

```
asm("        MPYF   R2          ,R1 ");
        /* W1 = dist * 1/temps      */


/* calcul Acc.      */
asm("        LDF    @_VECT+66  ,R6 ");
        /* W0 -> R6                 */
asm("        SUBF3  R6,R1      ,R6 ");
        /* W1 - WO -> (R6)          */
asm("        MPYF   R2          ,R6 ");
        /* (W1-W0)*1/temps -> (R6) */


/* save vit.& acc. */
asm("        STF    R1  ,@_VECT+66 ");
        /* store R1 -> vitesse     */
asm("        STF    R6  ,@_VECT+67 ");
        /* store R6 -> accelerat. */


asm("FINVIT  LDI    @_VECT+0   ,R7 ");
asm("        LSH    -1          ,R7 ");
asm("        BNC    AS_STD          ");
asm("        LDF    @_VECT+4    ,R1 ");


/********* ASSERVISSEMENT DE LA VITESSE ***************/
asm("        LDF    @_VECT+66  ,R6 ");
asm("        SUBF   R6          ,R1 ");
        /* (Wcons-Wmec) -> R1       */


/* PROPORTIONNEL */
asm("        LDF    @_VECT+11  ,R2 ");
        /* KP -> R2                 */
asm("        MPYF   R1          ,R2 ");
        /* KP(Wcons-Wext) -> R3     */


/* INTEGRE */
asm("        LDF    @_VECT+10  ,R3  ");
        /* ki -> R2                 */
```

```
asm("        MPYF R1          ,R3  ");
     /* ki(Wcons-Wext) -> R2    */
asm("        ADDF @_VECT+126 ,R3  ");
     /* ki(Wcons-Wext)+SOMME->R2 */


/* BORNE INTEGRAL */
asm("        LDF  @_VECT+53  ,R4  ");
     /* +BORNE_I DANS R4       */
asm("        NEGF R4          ,R5  ");
     /* -BORNE_I DANS R4       */
asm("        CMPF R5          ,R3  ");
asm("        LDFN R5          ,R3  ");
asm("        CMPF R4          ,R3  ");
asm("        LDFP R4          ,R3  ");
asm("        STF  R3  ,@_VECT+126 ");
     /* store (int)           */


/* SOMME INTEGRAL + PROPORTIONNEL */
asm("        ADDF  R3         ,R2  ");
asm("        STF   R2 ,@_VECT+69 ");
asm("        LDF   R2          ,R4  ");
asm("        BR    AS_VIT          ");


/**********       CALCUL DE AMPL      *********************/
asm("AS_STD LDF   @_VECT+1   ,R4  ");
     /* load Tcons -> R4       */
asm("AS_VIT ADDF  @_VECT+83  ,R4  ");
     /* R4 + Text -> R4        */
asm("        ADDF  @_VECT+118 ,R4  ");
     /* R4 + Text -> R4        */
asm("        MPYF  @_VECT+29  ,R4  ");
     /* R4 x 1/PSI -> R4       */


/* PROTECTION DE SURTENSION AVEC HYSTERESIS (103) (104) */
asm("        LDF   @_VECT+72 ,R7  ");
     /* load Vdc -> R7         */
```

```
asm("          CMPF  @_VECT+105,R7  ");
      /* Vdc - PROT_DC            */
asm("          LDFP  0           ,R4  ");
      /* SI POSITIF 0 -> R4     */
asm("          LDFP  @_VECT+104,R0  ");
      /* SI POS. PROT_DCMIN->R0 */
asm("          LDFN  @_VECT+103,R0  ");
      /* SI NEG. PROT_DCMAX->R0 */
asm("          STF   R0  ,@_VECT+105");
      /* R0 -> PROT_DC            */


/* LIMITE LE COURANT A Imax */
asm("          LDF   @_VECT+17 ,R0  ");
      /* LOAD Imax -> R0         */
asm("          NEGF  R0          ,R7  ");
      /* LOAD -Imax -> R7        */
asm("          CMPF  R7          ,R4  ");
      /* R4 - R7                 */
asm("          LDFN  R7          ,R4  ");
      /* IF R4<R7 => R7->R4     */
asm("          CMPF  R0          ,R4  ");
      /* R4 - R0                 */
asm("          LDFP  R0          ,R4  ");
      /* IF R4>R0 => R0-> R7     */


/******    CALCUL DE Iac Ibc ET Icc *********************/

asm("          LDI   @_VECT+63 ,R0  ");
      /* set position de carte  */
asm("          STI   R0   ,*+AR0(2)");
      /* store -> PAGEADDR.      */


asm("          LDF   R4          ,R7  ");
asm("          MPYF  @_VECT+18 ,R7  ");
      /* Cphase * AMPL -> R7     */
asm("          FIX   R7          ,R7  ");
```

```
       /* INT(R7) -> R7            */
asm("        ADDI  R7          ,IR0 ");
       /* TETA + COMP. PHASE       */
asm("        AND   OFFh        ,IR0 ");


asm("        MPYF3 R4,*+AR3(IR0),R1");
       /* AMPL x sin(IR0) -> R1  */
asm("        STF   R1    ,@_VECT+91 ");
       /* store IAC               */


asm("        LDI   170        ,R7  ");
       /* MODIF 26/10/94 */
asm("        CMPI  85         ,IR0 ");
asm("        LDIP  171        ,R7  ");
asm("        ADDI  R7         ,IR0 ");
       /*PHA + TETA +4*pi/3 ->IR0*/


asm("        AND   OFFh       ,IR0 ");
       /* tronquer sur 8 bits    */
asm("        MPYF3 R4,*+AR3(IR0),R3");
       /* AMPL x sin(IR0) -> R3  */
asm("        STF   R3    ,@_VECT+93");
       /* store ICC               */


asm("        ADDF3 R1,R3      ,R2  ");
       /* IAC + IBC -> R2         */
asm("        NEGF R2          ,R2  ");
       /* -1 * (IAC + IBC) -> R2 */
asm("        STF   R2    ,@_VECT+92");
       /* store IBC               */
/******   ACQUISITION DE Iabc ET NORMALISATION  **/

             .

asm("        LDI   *+AR1(3)   ,R4 ");
asm("        ASH   -20        ,R4 ");
       /* normal. a 12 bits signe*/
asm("        FLOAT R4         ,R4 ");
```

36

```
                /* convertie float        */
    asm("        LDF    @_VECT+23  ,R7 ");
                /* NO_Iabce -> R7          */
    asm("        MPYF   R7         ,R4 ");
                /* normalise valeur de Ia */
    asm("        ADDF   @_VECT+134 ,R4 ");
                /* additionne OFS_IA       */
    asm("        STF    R4    ,@_VECT+84");
                /* store IA                */


    asm("        LDI    *+AR1(3)   ,R5 ");
    asm("        ASH    -20        ,R5 ");
                /* normal. a 12 bits signe*/
    asm("        FLOAT  R5         ,R5 ");
                /* convertie float         */
    asm("        MPYF   R7         ,R5 ");
                /* normalise valeur de Ib */
    asm("        ADDF   @_VECT+135 ,R5 ");
                /* additionne OFS_IB       */
    asm("        STF    R5    ,@_VECT+85");
                /* store IB                */


    asm("        LDI    *+AR1(3)   ,R6 ");
    asm("        ASH    -20        ,R6 ");
                /* normal. a 12 bits signe*/
    asm("        FLOAT  R6         ,R6 ");
                /*convertie float          */
    asm("        MPYF   R6         ,R6 ");
                /*normalise valeur de Ic  */
    asm("        ADDF   @_VECT+136 ,R6 ");
                /* additionne OFS_IC       */
    asm("        STF    R6    ,@_VECT+86");
                /*store IC                 */


    /******        INITIALISATION CALCUL OFFSET        *********/
    asm("        LDI    @_VECT+124 ,R0 ");
```

37

```
            /* INCREMENT DE SOMME    */
asm("           CMPI  1000          ,R0 ");
            /* INCREMENT - 1000      */
asm("           BLE   INITSEN         ");
            /* SI <= 1000 (INITSEN)  */


/* VERIFIE S'IL Y A EU DEMANDE DE CALIBRATION DE SENSEUR */
asm("           LDI   @_VECT+0    ,R7 ");
asm("           LSH   -2          ,R7 ");
            /* COMPARE AVEC BIT1      */
asm("           BNC   OFSEND         ");
            /* PAS INIT. -> OFSEND   */
asm("           LDI   0           ,R0 ");
asm("           STI   R0 ,@_VECT+124 ");
asm("           LDF   0           ,R0 ");
asm("           STF   R0 ,@_VECT+121 ");
            /* RESET SOM_OFSIA       */
asm("           STF   R0 ,@_VECT+122 ");
            /* RESET SOM_OFSIB       */
asm("           STF   R0 ,@_VECT+123 ");
            /* RESET SOM_OFSIC       */
asm("           STF   R0 ,@_VECT+134 ");
            /* RESET OFS_IA          */
asm("           STF   R0 ,@_VECT+135 ");
            /* RESET OFS_IB          */
asm("           STF   R0 ,@_VECT+136 ");
            /* RESET OFS_IC          */
asm("           BR    OFSEND         ");


/* FAIRE UNE SOMME SUR 1000 UNITES DE Ia,Ib,Ic *****/
asm("INITSEN LDI   121          ,IR1");
asm("           ADDF3 *+AR4(IR1),R4,R7");
            /*IA(0) = IA(-1) + IA(0) */
asm("           STF   R7 ,*+AR4(IR1) ");
asm("           ADDI  1          ,IR1");
asm("           ADDF3 *+AR4(IR1),R5,R7");
```

```
        /*IB(0) = IB(-1) + IB(0) */
asm("        STF   R7 ,*+AR4(IR1) ");
asm("        ADDI  1            ,IR1");
asm("        ADDF3 *+AR4(IR1),R6,R7");
        /*IC(0) = IC(-1) + IC(0) */
asm("        STF   R7 ,*+AR4(IR1) ");
asm("        CMPI  1000         ,R0 ");
/* somme sur 1000 unite  */
asm("        BNED  OFSEND          ");
asm("        ADDI  1          ,R0  ");
asm("        STI   R0 ,@_VECT+124 ");
asm("        LDF   @_VECT+15  ,R0 ");


/* NORMALISE LORSQUE 1000 ADDITION EST ATTEIND *****/
asm("        MPYF3 *+AR4(IR1),R0,R7");
        /*  IC = SIC *-0.001   */
asm("        STF   R7 ,@_VECT+136 ");
asm("        SUBI  1          ,IR1");
asm("        MPYF3 *+AR4(IR1),R0,R7");
        /*  IB = SIB *-0.001   */
asm("        STF   R7 ,@_VECT+135 ");
asm("        SUBI  1          ,IR1");
asm("        MPYF3 *+AR4(IR1),R0,R7");
        /*  IA = SIA *-0.001   */
asm("        STF   R7 ,@_VECT+134 ");


/* SET BIT 1 POUR CONFIRMER LA NORMALISATION TERMINEE *****/
asm("        LDI 2            ,R7 ");
asm("        OR   @_VECT+64   ,R7 ");
asm("        STI R7     ,@_VECT+64");
/********     ORGANE DE REGULATION           **********/


/***** calcul d'erreur sur la consigne *****/
asm("OFSEND  SUBF3 R4,R1     ,R1  ");
        /* IAC - IA -> ERA        */
asm("        SUBF3 R5,R2     ,R2  ");
```

```
                  /* IBC - IB -> ERB         */
          asm("          SUBF3 R6,R3      ,R3  ");
                  /* ICC - IC -> ERC         */


          /***** calcul du proportionnel        *****/
          asm("          LDF @_VECT+12    ,R7  ");
                  /* load Kp dans R7         */
          asm("          MPYF3 R1,R7      ,R4  ");
                  /* Kp * (IAC - IA) -> R4  */
          asm("          MPYF3 R2,R7      ,R5  ");
                  /* Kp * (IBC - IB) -> R5  */
          asm("          MPYF3 R3,R7      ,R6  ");
                  /* Kp * (ICC - IC) -> R6  */


          /***** calcul de l'integral *****/


          asm("          LDF   @_VECT+16 ,R7  ");
                  /* load KI1 dans R7        */
          asm("          MPYF  R7         ,R1  ");
                  /* KI1*ERA -> R1           */
          asm("          ADDF  @_VECT+137,R1  ");
                  /* R7 + ERAEI1->R1         */
          asm("          MPYF  R7         ,R2  ");
                  /* KI1*ERB -> R2           */
          asm("          ADDF  @_VECT+138,R2  ");
                  /* R7 + ERBEI1->R2         */
          asm("          MPYF  R7         ,R3  ");
                  /* KI1*ERC -> R3           */
          asm("          ADDF  @_VECT+139,R3  ");
                  /* R7 + ERCEI1->R3         */


          /***** borne l'integral *****/
          asm("          LDF   @_VECT+22 ,R0  ");
          asm("          NEGF  R0         ,R7  ");


          asm("          CMPF  R7         ,R1  ");
```

```
asm("          LDFN  R7          ,R1  ");
     /* si negatif -XVdc ->VAC */
asm("          CMPF  R0          ,R1  ");
     /* SOMA - (XVdc)          */
asm("          LDFP  R0          ,R1  ");
     /* si negatif  XVdc ->VAC */
asm("          CMPF  R7          ,R2  ");
     /* SOMB - (-XVdc)         */
asm("          LDFN  R7          ,R2  ");
     /* si negatif -XVdc ->VBC */
asm("          CMPF  R0          ,R2  ");
     /* SOMB - (XVdc)          */
asm("          LDFP  R0          ,R2  ");
     /* si negatif  XVdc ->VBC */
asm("          CMPF  R7          ,R3  ");
     /* SOMC - (-XVdc)         */
asm("          LDFN  R7          ,R3  ");
     /* si negatif -XVdc ->VCC */
asm("          CMPF  R0          ,R3  ");
     /* SOMC - (XVdc)          */
asm("          LDFP  R0          ,R3  ");
     /* si negatif  XVdc ->VCC */


/* faire la somme des trois integral et divise par 3 *****/
asm("          ADDF3 R1,R2      ,R7  ");
asm("          ADDF  R3         ,R7  ");
asm("          MPYF  @_VECT+57 ,R7  ");
asm("                    SUBF      R7                    ,R1      ");
/*Int.a-(Int.a+Int.b+Int.c)/3->R1*/
asm("          STF   R1  ,@_VECT+137");
     /* store ERAEI -> ERAEI1  */
asm("          ADDF  R1         ,R4  ");
     /* prop.+derive+integr->R4*/
asm("                    SUBF      R7                    ,R2      ");
/*Int.b-(Int.a+Int.b+Int.c)/3->R2*/
asm("          STF   R2  ,@_VECT+138");
```

```
            /* store ERBEI -> ERBEI1  */
asm("         ADDF  R2        ,R5  ");
            /* prop.+derive+integr->R5*/
asm("                   SUBF    R7                    ,R3      ");
/*Int.c-(Int.a+Int.b+Int.c)/3->R3*/
asm("         STF   R3  ,@_VECT+139");
            /* store ERCEI -> ERCEI1  */
asm("         ADDF  R3        ,R6  ");
            /* prop.+derive+integr->R6*/


/* calcul de la tension FEM selonWmec*sin(TETA+AV_PHASE*Wmec)*/
/***** phase B *****/
asm("         LDF   @_VECT+28 ,R0  ");
            /* load AV_PHASE -> R0    */
asm("         MPYF  @_VECT+66 ,R0  ");
            /* AV_PHASE x Wmec -> R0  */
asm("         FIX   R0        ,R0  ");
            /* conver. signed int R0  */
asm("         ADDI  256       ,R0  ");
            /* conver. int 8 bits R0  */
asm("                   ADDI    R0                    ,IR0  ");
/*AV_PHASE*Wmec+TETA*4*pi/3->IR0*/
asm("         AND   0FFh      ,IR0 ");
            /* tronquer sur 8 bits    */
asm("         LDF   @_VECT+66 ,R2  ");
            /* load Wmec dans R2      */
asm("         MPYF3 R2,*+AR3(IR0),R3");
            /* Wmec x sin(IR0) -> R3  */
asm("         MPYF  @_VECT+27 ,R3  ");
            /* R3 x PSI -> R3         */
asm("         STF   R3  ,@_VECT+89 ");
            /* store EB */
asm("         ADDF  R3        ,R5  ");
            /* prop.+der.+inte.+EB->R5*/


asm("         LDI   85        ,R0  ");
```

```
          /* PATCH ENCODEUR 26/10/94*/
asm("          CMPI   170        ,IRO ");
asm("          LDIP   86         ,RO  ");
asm("          ADDI   RO         ,IRO ");
/* AV_PHASE*Wmec+TETA->IRO*/


asm("          AND    OFFh       ,IRO ");
          /* tronquer sur 8 bits    */
asm("          MPYF3 R2,*+AR3(IRO),R7");
          /* W x sin(IRO) -> R7     */
asm("          MPYF   @_VECT+27 ,R7  ");
          /* R7 x PSI -> R7         */
asm("          STF    R7   ,@_VECT+90 ");
          /* store EC */
asm("          ADDF   R7         ,R6  ");
          /* prop.+der.+inte.+EC->R6*/


asm("          ADDF   R3         ,R7  ");
          /* EB + EC -> R7          */
asm("          NEGF   R7         ,R7  ");
          /* -1 * (EB + EC) -> R7   */
asm("          STF    R7   ,@_VECT+88 ");
          /* store EA */
asm("          ADDF   R7         ,R4  ");
          /* prop.+der.+inte.+EA->R4*/


/******     ACQUISITION DE Vdc ET NORMALISATION  ***********/


asm("          LDI   *+AR1(3)   ,RO  ");
asm("          ASH   -20        ,RO  ");
          /* normal. a 12 bits signe*/
asm("          ABSI RO          ,RO  ");
          /* valeur absolue de VDC  */
asm("          CMPI 102         ,RO  ");
          /* Vdc - 5%xVdc           */
asm("          LDIN 102         ,RO  ");
```

```
                    /* si < 5% de Vdc->5%xVdc */
asm("          FLOAT R0        ,R0  ");
                    /* convertie float        */
asm("          MPYF @_VECT+26  ,R0  ");
                    /* normalise valeur de Vdc*/
asm("          STF  R0   ,@_VECT+72");
                    /* store Vdc              */


/* DIVISION  (1/Vdc) */
asm("          PUSHF           R0  ");
                    /* pushf VCC (float)      */
asm("          POP             R3  ");
                    /* pop   VDC (integer)->R7*/
asm("          ASH   -24       ,R3  ");
                    /* chercher exposant -> R7*/
asm("          NEGI            R3  ");
                    /* exposant = -exposant   */
asm("          SUBI  1         ,R3  ");
                    /* exposant = exposant - 1*/
asm("          ASH   24        ,R3  ");
                    /* retourne exposant -> R7*/
asm("          PUSH            R3  ");
                    /* push  )C (float)       */
asm("          PuPF            R3  ");
                    /* pop   VDC (integer)->R7*/
/* 1 ITERATION */
asm("          MPYF3      R3,R0,R2  ");
                    /* R2 = VDC * X[0]        */
asm("          SUBRF 2.0       ,R2  ");
                    /* R2 = 2.0 -VDC * X[0]   */
asm("          MPYF  R2        ,R3  ");
                    /* R3 = X[0] * R2         */
/* 2 ITERATION */
asm("          MPYF3      R3,R0,R2  ");
                    /* R2 = VDC * X[0]        */
asm("          SUBRF 2.0       ,R2  ");
```

```
        /* R2 = 2.0 -VDC * X[1]    */
asm("        MPYF   R2        ,R3  ");
        /* R3 = X[1] * R2          */
/* 3 ITERATION */
asm("        MPYF3     R3,R0,R2  ");
        /* R2 = VDC * X[0]         */
asm("        SUBRF  2.0       ,R2  ");
        /* R2 = 2.0 -VDC * X[2]    */
asm("        MPYF   R2        ,R3  ");
        /* R3 = X[2] * R2          */
/* 4 ITERATION */
asm("        MPYF3     R3,R0,R2  ");
        /* R2 = VDC * X[0]         */
asm("        SUBRF  2.0       ,R2  ");
        /* R2 = 2.0 -VDC * X[3]    */
asm("        MPYF   R2        ,R3  ");
        /* R3 = X[3] * R2          */
/* 5 ITERATION */
asm("        RND              R3  ");
        /* MINIMISER L'ERREUR      */
asm("        MPYF3     R3,R0,R2  ");
        /* R2 = VDC * X[4]         */
asm("        SUBRF  1.0       ,R2  ");
        /* R2 = 1.0 -VDC * X[4]    */
asm("        MPYF   R3        ,R2  ");
        /* R2 = X[4] * R2          */
asm("        ADDF   R2        ,R3  ");
        /* R3 = X[4] + R2          */
asm("        RND    R3        ,R3  ");
        /* R3 = X[4] + R2          */
asm("        STF    R3   ,@_VECT+125");
        /* store 1/VDC             */


/*    ACQUISITION DE COUPLE ET NORMALISATION  ***********/

asm("        LDI    *+AR1(3)   ,R2 ");
```

```
asm("          ASH   -20        ,R2 ");
asm("          FLOAT R2         ,R2 ");
asm("          MPYF  @_VECT+30  ,R2 ");
asm("          STF   R2  ,@_VECT+83");
asm("          LDI   *+AR1(3)   ,R2 "); /* 9/11/94 */
asm("          ASH   -20        ,R2 ");
asm("          FLOAT R2         ,R2 ");
asm("          MPYF  @_VECT+30  ,R2 ");
asm("      .   STF   R2  ,@_VECT+80");

asm("          LDI   *+AR1(3)   ,R2 "); /* 9/11/94 */
asm("          ASH   -20        ,R2 ");
asm("          FLOAT R2         ,R2 ");
asm("          MPYF  @_VECT+30  ,R2 ");
asm("          STF   R2  ,@_VECT+81");


/*********   CALCUL DE VAC      *****************/


asm("          MPYF  @_VECT+19 ,R0  ");
        /* XVdc x Vdc -> R0       */
asm("          NEGF  R0         ,R1  ");
        /* -XVdc x Vdc -> R1      */


/***** BORNE VAC *****/
asm("          CMPF  R1         ,R4  ");
        /* SOMA - (-XVdc)        */
asm("          LDFN  R1         ,R4  ");
        /* si negatif -XVdc ->VAC */
asm("          CMPF  R0         ,R4  ");
        /* SOMA - (XVdc)         */
asm("          LDFP  R0         ,R4  ");
        /* si negatif  XVdc ->VAC */
asm("          STF   R4  ,@_VECT+97 ");
        /* store VAC             */


/***** BORNE VBC *****/
```

```
asm("        CMPF  R1        ,R5  ");
        /* SOMB - (-XVdc)        */
asm("        LDFN  R1        ,R5  ");
        /* si negatif -XVdc ->VBC */
asm("        CMPF  R0        ,R5  ");
        /* SOMB - (XVdc)         */
asm("        LDFP  R0        ,R5  ");
        /* si negatif  XVdc ->VBC */
asm("        STF   R5  ,@_VECT+98 ");
        /* store VBC             */


/***** BORNE VCC *****/
asm("        CMPF  R1        ,R6  ");
        /* SOMC - (-XVdc)        */
asm("        LDFN  R1        ,R6  ");
        /* si negatif -XVdc ->VCC */
asm("        CMPF  R0        ,R6  ");
        /* SOMC - (XVdc)         */
asm("        LDFP  R0        ,R6  ");
        /* si negatif  XVdc ->VCC */
asm("        STF   R6  ,@_VECT+99 ");
        /* store VCC             */
/* convertir pour FPGA */
asm("NOENERG LDF   @_VECT+125,R3  ");
        /* 1/Vdc -> R3           */
asm("        MPYF  @_VECT+20 ,R3  ");
        /* KOUT1 x 1/Vdc -> R3   */
asm("        MPYF  R3        ,R4  ");
        /* R4 = 1/Vdc * 256 *VAC  */
asm("        MPYF  R3        ,R5  ");
        /* R5 = 1/Vdc * 256 *VBC  */
asm("        MPYF  R3        ,R6  ");
        /* R6 = 1/Vdc * 256 *VCC  */
asm("        LDF   @_VECT+21 ,R1  ");
        /* KOUT2 -> R1           */
asm("        ADDF  R1        ,R4  ");
```

```
            /* IMVA = R4 + 255.5      */
asm("         STF   R4 ,@_VECT+100 ");
            /* store IMVA            */
asm("         FIX   R4        ,R4  ");
            /* convertie R4 en integer*/
asm("         ADDF  R1        ,R5  ");
            /* IMVB = R5 + 255.5      */
asm("         STF   R5 ,@_VECT+101 ");
            /* store IMVB            */
asm("         FIX   R5        ,R5  ");
            /* convertie R5 en integer*/
asm("         ADDF  R1        ,R6  ");
            /* IMVC = R6 + 255.5      */
asm("         STF   R6 ,@_VECT+102 ");
            /* store IMVC            */
asm("         FIX   R6        ,R6  ");
            /* convertie R6 en integer*/


asm("         LDI   255       ,R7  ");
asm("         LSH   9         ,R7  ");
asm("         OR    R7        ,R6  ");
/* out FPGA */
asm("         LSH   9         ,R6  ");
            /* shift IMVC de 9       */
asm("         OR    R5        ,R6  ");
            /* IMVC,IMVB -> R6       */
asm("         LSH   9         ,R6  ");
            /* shift IMVC,IMVB de 9  */
asm("         OR    R4        ,R6  ");
            /* IMVC,IMVB,IMVA -> R6  */
asm("         LDI   @_VECT+62 ,R1  ");
            /* set position de carte */
asm("         STI   R1   ,*+AR0(2)");
            /* store -> PAGEADDR.    */
asm("         STI   R6   ,*+AR1(3)");
            /* out FPGA             */
```

```
/***    TRANSFERT VECTEUR FONTION VEHICULE AU C30   ******/
/* prepare transfert vecteur vers c30 */
asm("        LDI @_VECT+58    ,AR7 ");
        /* store ad.DRAMIN -> AR7 */
asm("        LDI  0           ,R7 ");
asm("        STI R7        ,*+AR2(0)");
asm("        STI AR7       ,*+AR2(4)");
        /*store dans src.->AR2(4) */
asm("        STI AR4       ,*+AR2(6)");
        /*store dans dest.->AR2(6)*/
asm("        LDI 33          ,R7  ");          /* 33 */
asm("        STI R7        ,*+AR2(8)");
asm("        LDI 0C53h       ,R7  ");
/* verifi si j'ai le droit de lire */
asm("        LDI 0fh         ,R1  ");
asm("        CMPI *-AR7(1)   ,R1  ");
        /* 0fh - mem(20 0001)     */
asm("        BN  NDMAIN          ");

/* lance le transfert si < 10 */
asm("        STI R7        ,*+AR2(0)");

/* watch dog laisse une trace */
asm("        LDI 3h          ,R7  ");
asm("        STI R7        ,*-AR7(1) ");

/******** TRANSFERT VECTEUR DANS DRAM   *****************/

asm("        LDI  0         , IR0 ");
asm("        LDI  @_VECT1   , AR0 ");
asm("        LDI  @_VECT+58 , AR1 ");
asm("BOUCLE: CMPI 40        , IR0 ");
asm("        BLTD BOUCLE         ");
asm("        LDF  *+AR0(IR0), R0  ");
asm("        STF  R0  ,*+AR1(IR0) ");
asm("        ADDI 1         , IR0 ");
```

```
asm("          LDI  @_VECT+58  ,AR7 ");
       /* store ad. DRAM -> AR7  */
asm("          LDI  0h          ,R0 ");
asm("          STI  R0     ,*-AR7(2) ");
asm("          STI  R0     ,*-AR7(1) ");
asm("          LDI  @_VECT+59  ,AR7 ");
       /* store ad. OSCIL.->AR7  */
asm("          STI  R0     ,*-AR7(1) ");
asm("          LDI  86          ,R0 ");
asm("          STI  R0     ,*-AR7(3) ");
asm("          STI  R0     ,*-AR7(4) ");
asm("          STI  R0     ,*-AR7(5) ");
asm("          STI  R0     ,*-AR7(6) ");


/******** SET L'ADRESSE DES POINTEURS    *****************/

asm("          LDI  @_CONTMIX  ,AR0 ");
       /* control mix bus ->AR0  */
asm("          LDI  @_CONTACQ  ,AR1 ");
       /* control acquit. ->AR1  */
asm("          LDI  @_CONTDMA  ,AR2 ");
       /* control DMA      ->AR2  */
asm("          LDI  @_SINUS    ,AR3 ");
       /* adr. vect.SINUS ->AR3  */
asm("          LDI  @_VECT1    ,AR4 ");
       /* adresse sramin  ->AR4  */
asm("          LDI  @_CONTIM1  ,AR5 ");
       /* control timer #1->AR5  */
/******** INIT. CARTE D'ACQUISITION      ******************/

asm("          LDI  @_VECT+61  , R0 ");
       /*select module 0, A27=0  */
asm("          STI  R0     ,*+AR0(2) ");
asm("          LDI  80h          , R0 ");
       /* inverse polarite entree*/
asm("          STI  R0     ,*+AR1(1) ");
```

```
asm("          LDI  0h          , R1 ");
          /*reset FIFO              */
asm("          STI  R1       ,*+AR1(0) ");
asm("          NOP                   ");
asm("          NOP                   ");
asm("          LDI  10h         , R0 ");
          /*initial. channel ram    */
asm("          STI  R0       ,*+AR1(0) ");
asm("          STI  R1       ,*+AR1(3) ");
          /* set channel #1          */
asm("          LDI  021h        , R0 ");
          /* set channel #2          */
asm("          STI  R0       ,*+AR1(3) ");
asm("          LDI  022h        , R0 ");
          /* set channel #3          */
asm("          STI  R0       ,*+AR1(3) ");
asm("          LDI  03h         , R0 ");
          /* set channel #4          */
asm("          STI  R0       ,*+AR1(3) ");
asm("          LDI  30h         , R0 ");
          /* set channel #17 LDI 0B0H */
asm("          STI  R0       ,*+AR1(3) ");
asm("          LDI  11h          , R0 ");/* 9/11/94 */
asm("          STI  R0       ,*+AR1(3) ");
asm("          LDI  92h          , R0 ");/* 9/11/94 */
asm("          STI  R0       ,*+AR1(3) ");
asm("          NOP                   ");
asm("          NOP                   ");
asm("          LDI 0            ,IR1 ");
/******** DEPART DU SYSTEME INTERRUPT   *****************/
asm("          STI  R1          ,*AR0 ");
          /* reset intmix 02         */
asm("          LDI  0Eh         , R0  ");
          /* enable intmix 02        */
asm("          STI  R0          ,*AR0 ");
asm("          LDI  5h          , IE  ");
```

```
              /* enable int02 ET int00  */
    asm("          ST᠊  R1         ,*AR1 ");
              /*᠊eset   ᠊0 carte acqui. */
    asm("          Lᴅ᠊ 0F4h       , R0  ");
              /* start acqui          */
    asm("          STI  R0         ,*AR1 ");
    asm("          LDI  @_VECT+62 , R1  ");
              /* select module 2, A27=1 */
    asm("          STI  R1     ,*+AR0(2) ");
    asm("          OR   2000h      , ST ");
              /* set GIE enable        */
    asm("          LDI  255       , R7  ");
    asm("          LSH  27        , R7  ");
    asm("          LDI  @_VECT+62 ,R1    ");
    asm("          STI  R1  ,*+AR0(2)    ");
    asm("          STI  R7  ,*+AR1(3)    ");
```

Bien que la présente invention ait été précédemment expliquée par le biais de réalisations préférées de celle-ci, il doit être précisé que toute modification à ces réalisations préférées, à l'intérieur du cadre des revendications jointes, n'est pas considérée changer ni altérer la nature et la portée de la présente invention.

**Revendications**

1.  Méthode pour démarrer une machine synchrone (2) ayant un rotor (93) et un stator (92) muni d'enroulements, le rotor (93) ayant une position initiale par rapport au stator (92), la méthode comprend les étapes suivantes (a) initialiser une phase de démarrage d'une première somme vectorielle de sommes vectorielles successives de courants destinées à être appliquée aux enroulements; (b) appliquer des sommes vectorielles successives de courants aux enroulements, chacune des sommes vectorielles successives ayant une phase; (c) détecter, pour chacune des sommes vectorielles de courants appliquée à l'étape (b), un mouvement du rotor (93) ainsi qu'une direction de ce mouvement par rapport au stator (92), la méthode est caractérisée en ce qu'elle comprend en outre les étapes suivantes:

    (d) compenser, pour chaque mouvement et chaque direction détectés à l'étape (c), la phase (PVE) d'une somme vectorielle subséquente des sommes vectorielles successives de courants appliquée aux enroulement pour ramener le rotor (93) vers sa position initiale;
    (e) détecter si le rotor (93) a bougé par rapport au stator (92) après l'application des sommes vectorielles successives de courants de l'étape (b) et soit augmenter la phase de démarrage d'une valeur différente d'un multiple de 180 degrés électriques si le rotor n'a pas bougé par rapport au stator (92) et retourner à l'étape (b), ou bien aller à l'étape (f); et
    (f) mémoriser la valeur de phase de la dernière des sommes vectorielles successives appliquée aux enroulements, ainsi la machine (2) est maintenant prête à être mise en opération à partir de la valeur de phase mémorisée à l'étape (f).

2.  Méthode selon la revendication 1, caractérisée en ce que, dans l'étape (d), la phase PVE est calculée au moyen des équations suivantes:

$$INT = K*MOV + INT1$$

$$PVE = INT + CNT$$

où INT1 est une erreur précédente qui a été intégrée et calculée, INT est une erreur actuelle intégrée et calculée, MOV est le mouvement et la direction de ce mouvement qui ont été détectés à l'étape (c) par rapport à la position initiale, CNT est représentatif d'une position du rotor (93), et K est une constante prédéterminée.

3. Méthode selon la revendication 1, caractérisée en ce que, dans l'étape (d), la phase PVE est calculée au moyen des équations suivantes:

$$INT = K*MOV + INT1$$

$$PVE = Kp*MOV + INT + CNT$$

où INT1 est une erreur précédente qui a été intégrée et calculée, INT est une erreur actuelle intégrée et calculée, MOV est le mouvement et la direction de ce mouvement qui ont été détectés à l'étape (c) par rapport à la position initiale, CNT est représentatif d'une position du rotor (93), et K et Kp sont des constantes prédéterminées.

4. Méthode selon la revendication 1, caractérisée en ce que l'étape (b) comprend les étapes suivantes:

(i) déterminer pour chacune des sommes vectorielles successives de courants appliquée aux enroulements, une valeur d'amplitude augmentée d'une somme vectorielle subséquente des sommes vectorielles successives de courants destinée à être appliquée aux enroulements; et
(ii) déterminer si la valeur d'amplitude augmentée de la somme vectorielle subséquente a atteint une valeur d'amplitude prédéterminée, et soit terminer l'application des sommes successives de courants de l'étape (b) et aller à l'étape (e) si la valeur d'amplitude augmentée de la somme vectorielle subséquente a atteint la valeur d'amplitude prédéterminée, ou continuer l'application des sommes vectorielles successives de l'étape (b).

5. Méthode selon la revendication 1, caractérisée en ce que, dans l'étape (b), chacune des sommes vectorielles successives de courants est appliquée aux enroulements au moyen de signaux d'impulsion modulés en largeur.

6. Méthode selon la revendication 4, caractérisée en ce que la première somme vectorielle des sommes vectorielles successives de courants a une amplitude de valeur zéro, et une phase de valeur zéro.

7. Méthode selon la revendication 4, caractérisée en ce que la valeur d'amplitude augmentée est déterminée à partir de l'équation suivante:

$$AV = AVE + I$$

où AV est la valeur d'amplitude augmentée, AVE est une valeur d'amplitude d'une somme précédente des sommes vectorielles successives de courants appliquée aux enroulements et I est une valeur de constante.

8. Méthode selon la revendication 1, caractérisée en ce que, dans l'étape (e), la phase de démarrage est augmentée par une valeur de 90 degrés électriques.

9. Appareil pour démarrer une machine synchrone (2) ayant un rotor (93) et un stator (92) muni d'enroulements, le rotor (93) ayant une position initiale par rapport au stator (92), l'appareil comprenant des moyens (6) pour initialiser une phase de démarrage d'une première somme vectorielle de sommes vectorielles successives de courants destinée à être appliquée aux enroulements, des moyens (6, 8, 10, 12) pour appliquer des sommes vectorielles successives de courants aux enroulements, chacune des sommes vectorielles successives ayant une phase, et des moyens (14, 16) pour détecter, pour chacune des sommes vectorielles de courants appliquée, un mouvement du rotor (93) ainsi qu'une direction de ce mouvement par rapport au stator (92), l'appareil étant caractérisé en ce qu'il comprend en outre:

des moyens (6) pour compenser, pour chaque mouvement et chaque direction qui ont été détectés, la phase d'une somme vectorielle subséquente des sommes vectorielles successives de courants appliquée aux enroulements pour ramener le rotor (93) vers sa position initiale;

des moyens (6) pour augmenter la phase de démarrage d'une valeur différente d'un multiple de 180 degrés électriques si le rotor (93), après l'application des sommes vectorielles successives de courants, n'a pas bougé par rapport au stator (92); et

des moyens (6) pour mémoriser une valeur de phase de la dernière des sommes vectorielles successives appliquée au rotor (93), ainsi la machine (2) est maintenant prête à être mise en opération à partir de la valeur de phase mémorisée par les moyens (6) pour mémoriser.

10. Appareil selon la revendication 9, caractérisé en ce que les moyens (14, 16) pour détecter le mouvement du rotor (93) et la direction de ce mouvement par rapport au stator (92) comprennent un compteur bidirectionnel (16) et un encodeur par incrément (14) ayant une entrée (18) reliée au rotor (93) et une sortie (20) branchée à une entrée (22) du compteur bidirectionnel (16).

11. Appareil selon la revendication 9, caractérisé en ce que les moyens (6) pour initialiser, les moyens (6) pour augmenter, les moyens (6) pour mémoriser et les moyens (6) pour compenser font tous partie d'une unité de contrôle (6) munie d'un logiciel d'opération.

12. Appareil selon la revendication 10, caractérisé en ce que:

l'encodeur par incrément (14) a une seconde sortie (40) pour générer un signal d'index (42); et

le compteur bidirectionnel (16) a une entrée (44) de charge pour recevoir le signal d'index (42), ainsi le signal d'index (42) est utilisé comme un signal de charge pour confirmer la position absolue du rotor (93) par rapport au stator (92) lorsque la machine synchrone (2) est en opération.

13. Appareil selon la revendication 9, caractérisé en ce que les moyens (6, 8, 10, 12) pour appliquer comprennent:

une unité de contrôle (6) munie d'un logiciel d'opération;

un détecteur de courant (8) ayant des entrées (24) pour mesurer des courants appliqués aux enroulements et une sortie numérique (26) branchée à une entrée (27) de l'unité de contrôle (6);

un convertisseur (10) ayant des sorties (28) pour appliquer les sommes vectorielles successives de courants aux enroulements, et une entrée (30) pour recevoir des signaux de commande de l'unité de contrôle (6); et

un détecteur de tension (12) a une entrée (32) pour mesurer une tension d'alimentation appliquée au convertisseur (10) et une sortie numérique (34) branchée à une entrée (35) de l'unité de contrôle (6).

**Patentansprüche**

1. Verfahren zum Ingangsetzen einer synchronen Maschine (2) mit einem Rotor (93) und einem mit Wicklungen versehenen Stator (92), wobei der Rotor (93) in bezug auf den Stator (92) eine Anfangsposition besitzt, wobei das Verfahren die folgenden Schritte umfaßt: (a) Initialisieren einer Ingangsetzungsphase einer ersten Vektorsumme aus aufeinanderfolgenden Vektorsummen von Strömen, die dazu bestimmt sind, an die Wicklungen angelegt zu werden; (b) Anlegen der aufeinanderfolgenden Vektorsummen von Strömen an die Wicklungen, wobei jede der aufeinanderfolgenden Vektorsummen eine Phase besitzt; (c) für jede der Vektorsummen von im Schritt (b) angelegten Strömen Erfassen einer Bewegung des Rotors (93) sowie einer Richtung dieser Bewegung in bezug auf den Stator (92), wobei das Verfahren dadurch gekennzeichnet ist, daß es außerdem die folgenden Schritte enthält:

(d) für jede Bewegung und jede Richtung, die im Schritt (c) erfaßt werden, Kompensieren der Phase (PVE) einer Vektorsumme, die den aufeinanderfolgenden Vektorsummen von an die Wicklungen angelegten Strömen nachfolgt, um den Rotor (93) in seine Anfangsposition zurückzustellen;

(e) Erfassen, ob sich der Rotor (93) in bezug auf den Stator (92) bewegt hat, nachdem die aufeinanderfolgenden Vektorsummen von Strömen im Schritt (b) angelegt worden sind, und entweder Erhöhen der Ingangsetzungsphase um einen unterschiedlichen Wert eines Vielfachen von 180 elektrischen Grad, falls sich der Rotor in bezug auf den Stator (92) nicht bewegt hat, und Zurückkehren zum Schritt (b), oder Weitergehen zum Schritt (f); und

(f) Speichern des Wertes der Phase der letzten der aufeinanderfolgenden Vektorsummen, die an die Wicklungen angelegt werden, so daß die Maschine (2) nun bereit ist, anhand des im Schritt (f) gespeicherten Phasenwertes in Betrieb gesetzt zu werden.

2. Verfahren nach Anspruch 1, dadurch gekennzeichnet, daß Im Schritt (d) die Phase (PVE) mittels der folgenden Gleichungen berechnet wird:

$$INT = K \times MOV + INT1$$

$$PVE = INT + CNT$$

wobei INT1 ein vorhergehender Fehler ist, der integriert und berechnet worden ist, INT ein momentaner integrierter und berechneter Fehler ist, MOV die Bewegung und die Richtung dieser Bewegung ist, die im Schritt (c) in bezug auf die Anfangsposition erfaßt worden sind, CNT eine Position des Rotors (93) darstellt und K eine vorgegebene Konstante ist.

3. Verfahren nach Anspruch 1, dadurch gekennzeichnet, daß im Schritt (d) die Phase (PVE) mittels der folgenden Gleichungen berechnet wird:

$$INT = K \times MOV + INT1$$

$$PVE = Kp \times MOV + INT + CNT$$

wobei INT1 ein vorhergehender Fehler ist, der integriert und berechnet worden ist, INT ein momentaner integrierter und berechneter Fehler ist, MOV die Bewegung und die Richtung dieser Bewegung ist, die im Schritt (c) in bezug auf die Anfangsposition erfaßt worden sind, CNT eine Position des Rotors (93) repräsentiert und K und Kp vorgegebene Konstanten sind.

4. Verfahren nach Anspruch 1, dadurch gekennzeichnet, daß der Schritt (b) die folgenden Schritte umfaßt:

(i) für jede der aufeinanderfolgenden Vektorsummen von an die Wicklungen angelegten Strömen Bestimmen eines Amplitudenwertes, der um eine nachfolgende Vektorsumme aus den aufeinanderfolgenden Vektorsummen von Strömen, die an die Wicklungen angelegt werden sollen, erhöht ist; und
(ii) Bestimmen, ob der um die nachfolgende Vektorsumme erhöhte Amplitudenwert einen vorgegebenen Amplitudenwert erreicht hat, und entweder Beenden des Anlegens aufeinanderfolgender Summen von Strömen des Schrittes (b) und Gehen zum Schritt (e), falls der um die nachfolgende Vektorsumme erhöhte Amplitudenwert den vorgegebenen Amplitudenwert erreicht hat, oder weiterhin Anlegen der aufeinanderfolgenden Vektorsummen des Schrittes (b).

5. Verfahren nach Anspruch 1, dadurch gekennzeichnet, daß im Schritt (b) jede der aufeinanderfolgenden Vektorsummen von Strömen mittels breitenmodulierter Impulssignale an die Wicklungen angelegt wird.

6. Verfahren nach Anspruch 4, dadurch gekennzeichnet, daß die erste Vektorsumme der aufeinanderfolgenden Vektorsummen von Strömen eine Amplitude mit Wert null und eine Phase mit Wert null besitzt.

7. Verfahren nach Anspruch 4, dadurch gekennzeichnet, daß der erhöhte Amplitudenwert anhand der folgenden Gleichung bestimmt wird:

$$AV = AVE + I$$

wobei AV der erhöhte Amplitudenwert ist, AVE ein Amplitudenwert einer vorhergehenden Summe aus aufeinanderfolgenden Vektorsummen von an die Wicklungen angelegten Strömen ist und I ein Wert einer Konstante ist.

8. Verfahren nach Anspruch 1, dadurch gekennzeichnet, daß im Schritt (e) die Ingangsetzungsphase um einen Wert von 90 elektrischen Grad erhöht ist.

9. Vorrichtung zum Ingangsetzen einer synchronen Maschine (2) mit einem Rotor (93) und einem mit Wicklungen versehenen Stator (92), wobei der Rotor (93) eine Anfangsposition in bezug auf den Stator (92) besitzt, wobei die Vorrichtung Mittel (6) zum Initialisieren einer Ingangsetzungsphase einer ersten Vektorsumme aus aufeinanderfolgenden Vektorsummen von Strömen, die an die Wicklungen angelegt werden sollen, Mittel (6, 8, 10, 12) zum Anlegen von aufeinanderfolgenden Vektorsummen von Strömen an die Wicklungen, wobei jede der aufeinanderfolgenden Vektorsummen eine Phase besitzt, sowie Mittel (14, 16) umfaßt, die für jede der angelegten Vektorsummen von Strömen eine Bewegung des Rotors (93) sowie eine Richtung dieser Bewegung in bezug auf den Stator (92) erfassen, wobei die Vorrichtung dadurch gekennzeichnet ist, daß sie außerdem:

Mittel (6), die für jede Bewegung und jede Richtung, die erfaßt worden sind, die Phase einer nachfolgenden Vektorsumme aus aufeinanderfolgenden Vektorsummen von durch die Wicklungen geschickten Strömen kompensieren, um den Rotor (93) in seine Anfangsposition zurückzustellen;

Mittel (6) zum Erhöhen der Ingangsetzungsphase um einen unterschiedlichen Wert eines Vielfachen von 180 elektrischen Grad, falls sich der Rotor (93) nach dem Anlegen der aufeinanderfolgenden Vektorsummen von Strömen in bezug auf den Stator (92) nicht bewegt hat; und

Mittel (6) zum Speichern eines Phasenwertes der letzten der an den Rotor (93) angelegten aufeinanderfolgenden Vektorphasen, so daß die Maschine (2) nun bereit ist, anhand des von den Speichermitteln (6) gespeicherten Phasenwertes In Betrieb gesetzt zu werden, umfaßt.

**10.** Vorrichtung nach Anspruch 9, dadurch gekennzeichnet, daß die Mittel (14, 16) zum Erfassen der Bewegung des Rotors (93) und der Richtung dieser Bewegung in bezug auf den Stator (92) einen bidirektionalen Zähler (16) sowie einen Inkrement-Codierer (14), der einen mit dem Rotor (93) verbundenen Eingang (18) und einen an einen Eingang (22) des bidirektionalen Zählers (16) angeschalteten Ausgang (20) umfaßt, enthalten.

**11.** Vorrichtung nach Anspruch 9, dadurch gekennzeichnet, daß die Mittel (6) zum Initialisieren, die Mittel (6) zum Erhöhen, die Mittel (6) zum Speichern und die Mittel (6) zum Kompensieren sämtlich einen Teil einer Steuereinheit (6) bilden, die mit einer Betriebssoftware versehen ist.

**12.** Vorrichtung nach Anspruch 10, dadurch gekennzeichnet, daß

der Inkrement-Codierer (14) einen zweiten Ausgang (40) besitzt, um ein Indexsignal (42) zu erzeugen; und der bidirektionale Zähler (16) einen Lasteingang (44) besitzt, um das Indexsignal (42) zu empfangen, so daß das Indexsignal (42) als ein Lastsignal verwendet wird, um die Absolutposition des Rotors (93) in bezug auf den Stator (92) zu bestätigen, wenn die synchrone Maschine (2) in Betrieb ist.

**13.** Vorrichtung nach Anspruch 9, dadurch gekennzeichnet, daß die Mittel (6, 8, 10, 12) zum Anlegen

eine Steuereinheit (6), die mit einer Betriebssoftware versehen ist;

einen Stromdetektor (8), der Eingänge (24) zum Messen der an die Wicklungen angelegten Ströme sowie einen digitalen Ausgang (26) besitzt, der an einen Eingang (27) der Steuereinheit (6) angeschaltet ist;

einen Umsetzer (10) mit Ausgängen (28) zum Anlegen der aufeinanderfolgenden Vektorsummen von Strömen an die Wicklungen sowie einen Eingang (30) zum Empfangen der Steuersignale von der Steuereinheit (6); und einen Spannungsdetektor (12) mit einem Eingang (32) zum Messen einer an den Umsetzer (10) angelegten Versorgungsspannung und einem digitalen Ausgang (34), der an einen Eingang (35) der Steuereinheit (6) angeschaltet ist, umfassen.

**Claims**

**1.** Method for starting up a synchronous machine (2) having a rotor (93) and a stator (92) provided with windings, the rotor (93) having an initial position with respect to the stator, the method comprising the steps of (a) initializing a starting phase of a first vectorial sum of successive vectorial sums of currents to be applied to the windings; (b) applying successive vectorial sums of currents to the windings, each of the successive vectorial sums having a phase; (c) detecting, for each of the vectorial sums of currents applied in said step (b), a movement of the rotor (93) and a direction thereof with respect to the stator (92), the method is characterized in that it further comprises the steps of:

(d) compensating, for each movement and each direction detected in step (c), the phase (PVE) of a subsequent vectorial sum of the successive vectorial sums of currents applied to the windings to bring back the rotor (93) towards its initial position;

(e) detecting whether the rotor (93) has moved with respect to the stator (92) after applying of the successive vectorial sums of currents in step (b) and either increasing the starting phase by a value different from a multiple of 180 electrical degrees if said rotor has not moved with respect to the stator (92) and returning to step (b), or going to step (f); and

(f) storing the phase value of the last of the successive vectorial sums applied to the windings, whereby the machine (2) is now ready to operate from the phase value stored in step (f).

2.  Method according to claim 1, characterized in that, in said step (d), the phase PVE is calculated by means of the following equations:

$$INT = K*MOV + INT1$$

$$PVE = INT + CNT$$

where INT1 is a precedent error which has been integrated and calculated, INT is a current calculated integrated error, MOV is the movement and the direction thereof detected in step (c) with respect to the initial position, CNT is representative of a position of the rotor (93), and K is a predetermined constant.

3.  Method according to claim 1, characterized in that, in step (d), the phase PVE is calculated by means of the following equations:

$$INT = K*MOV + INT1$$

$$PVE = Kp*MOV + INT + CNT$$

where INT1 is a precedent error which has been integrated and calculated, INT is a current calculated integrated error, MOV is the movement and the direction thereof detected in step (c) with respect to the initial position, CNT is representative of a position of the rotor (93), and K and Kp are predetermined constants.

4.  Method according to claim 1, characterized in that, step (b) comprises the steps of:

(i) determining, for each of the successive vectorial sums of currents applied to the windings, an increased amplitude value of a subsequent vectorial sum of the successive vectorial sums of currents to be applied to the windings; and

(ii) determining whether the increased amplitude value of the subsequent vectorial sum has reached a predetermined amplitude value, and either terminating the applying of successive sums of currents of step (b) and going to step (e) if the increased amplitude value of the subsequent vectorial sum has reached the predetermined amplitude value, or continuing the applying of successive vectorial sums of step (b).

5.  Method according to claim 1, characterized in that, in step (b), each of the successive vectorial sums of currents is applied to the windings by means of pulse-width modulated signals.

6.  Method according to claim 4, characterized in that the first vectorial sum of successive vectorial sums of currents has an amplitude of zero value, and a phase of zero value.

7.  Method according to claim 4, characterized in that the increased amplitude value is determined from the following equation:

$$AV = AVE + I$$

where AV is the increased amplitude value, AVE is an amplitude value of a precedent sum of the successive vectorial sums of currents applied to the windings, and I is a constant value.

8. Method according to claim 1, characterized in that, in step (e), the starting phase is increased by a value of 90 electrical degrees.

9. Apparatus for starting up a synchronous machine (2) having a rotor (93) and a stator (92) provided with windings, the rotor (93) having an initial position with respect to the stator (92), the apparatus comprising means (6) for initializing a starting phase of a first vectorial sum of successive vectorial sums of currents to be applied to the windings, means (6, 8, 10, 12) for applying successive vectorial sums of currents to the windings, each of the successive vectorial sums having a phase, and means (14, 16) for detecting, for each of the applied vectorial sums of currents, a movement of the rotor (93) and a direction thereof with respect to the stator (92), the apparatus being characterized in that it further comprises:

means (6) for compensating, for each movement and each direction which have been detected, the phase of a subsequent vectorial sum of the successive vectorial sums of currents applied to the windings to bring back the rotor (93) towards its initial position;
means (6) for increasing the starting phase by a value different from a multiple of 180 electrical degrees if the rotor (93), after applying of the successive vectorial sums of currents, has not moved with respect to the stator (92); and
means (6) for storing the phase value of the last of the successive vectorial sums applied to the rotor (93), whereby the machine (2) is ready to operate from the phase value stored in the means (6) for storing.

10. Apparatus according to claim 9, characterized in that the means (14, 16) for detecting the movement of the rotor (93) and the direction thereof with respect to the stator (92) comprise an up/down counter (16) and an incremental encoder (14) having an input (18) connected to the rotor (93) and an output (20) connected to an input (22) of the up/down counter (16).

11. Apparatus according to claim 9, characterized in that the means (6) for initializing, the means (6) for increasing, the means (6) for storing, and the means (6) for compensating are all parts of a control unit (6) provided with an operating software.

12. Apparatus according to claim 10, characterized in that:

the incremental encoder (14) has a second output (40) for generating an index signal (42); and
the up/down counter (16) has a loading input (44) for receiving the index signal (42), whereby the index signal (42) is used as a loading signal to confirm the absolute position the rotor (93) with respect to the stator (92) when the synchronous machine (2) is running.

13. Apparatus according to claim 9, characterized in that the means (6, 8, 10, 12) for applying comprise:

a control unit (6) provided with an operating software;
a current detector (8) having inputs (24) for detecting the currents applied to the windings and a digital output (26) connected to an input (27) of the control unit (6);
an inverter (10) having outputs (28) for applying the successive vectorial sums of currents to the windings, and an input (30) for receiving commanding signals from the control unit (6); and
a voltage detector (12) having an input (32) for detecting a power supply voltage applied to the inverter (10) and a digital output (34) connected to an input (35) of the control unit (6).

FIG.1

FIG.2

Vdc

32
12
34
35
6
39
37
36
16
22
44
27
26
8
24
29
30
11
10
28
42
4
2
18
14
40
20

EP 0 800 718 B1

EP 0 800 718 B1

FIG.3A

61

## FIG.3B

FIG.5A

FIG.5B

Vdc

35    6

MM

Ref

50usec

NN    REa    $\dfrac{(REa+0.5)*Ref}{Vdc}$    PWMa

29

OO    REb    $\dfrac{(REb+0.5)*Ref}{Vdc}$    PWMb

PP    REc    $\dfrac{(REc+0.5)*Ref}{Vdc}$    PWMc

LL

FIG.5C

FIG.6

EP 0 800 718 B1

FIG.7

EP 0 800 718 B1